# EUROPEAN PATENT APPLICATION

(11) **EP 4 503 654 A1**
(43) Date of publication of application: **05.02.2025**
(21) Application number: 23777998.8
(22) Date of filing: 23.03.2023
(51) Int. Cl.: H04W 4/02

(54) **INFORMATION PROCESSING METHOD AND APPARATUS, AND COMMUNICATION DEVICE AND STORAGE MEDIUM**

(30) Priority: 28.03.2022 CN 202210314685; 30.09.2022 CN 202211209187
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WANG, Dan, Beijing 100032 (CN); LI, Yongjing, Beijing 100032 (CN)
(74) Representative: Weickmann & Weickmann PartmbB
(86) International application number: PCT/CN2023/083392
(87) International publication number: WO 2023/185629

(57) **Abstract**

Embodiments of the present disclosure disclose an information processing method and device, and a communication equipment and a storage medium. The method includes: receiving, by a first network device, first information sent by a second network device. The first information at least includes a first service area, and the first information further includes at least one of the following: terminal information of a 5G virtual network group, data network name, slice information, indication to use a local area data network (LADN) mechanism, and indication to use a session management function (SMF) control mechanism.

## Description

### CROSS-REFERENCE TO RELATED APPLICATION

The present application is filed based on and claims the priority of Chinese Application No. 202210314685.1 filed on March 28, 2022 and the priority of Chinese Application No. 202211209187.7 filed on September 30, 2022, the disclosure of which are incorporated in their entireties by reference herein.

### TECHNICAL FIELD

The present disclosure relates to the field of mobile communication technologies, and in particular to an information processing method, device, communication equipment and storage medium.

### BACKGROUND

Currently, the implementation plan of the fifth-generation mobile communications (5th-Generation, 5G) virtual network (VN) group does not clearly propose the service area of the 5G VN group and no specific implementation plan is given for how UEs can dynamically join the 5G VN group and communicate within the group.

### SUMMARY

In order to solve the existing technical problems, embodiments of the present disclosure provide an information processing method, device, communication equipment and storage medium.

In order to achieve the above object, the technical solution of the embodiment of the present disclosure is implemented as follows.

In a first aspect, one embodiment of the present disclosure provides an information processing method, including:

receiving, by a first network device, first information sent by a second network device; wherein the first information at least includes a first service area, and the first information further includes at least one of the following: terminal information of a 5G virtual network group, data network name, slice information, indication to use a local area data network (LADN) mechanism, and indication to use a session management function (SMF) control mechanism.

In the above solution, the method further includes:
receiving, by the first network device, second information sent by a third network device, wherein the second information is used to obtain first data;
sending, by the first network device, third information to the third network device, wherein the third information includes the first data, and the first data includes at least one of the following: data network name, first service area and slice information.

In the above solution, the method further includes:
receiving, by the first network device, fourth information sent by a fourth network device, wherein the fourth information is used to obtain second data;
sending, by the first network device, fifth information to the fourth network device, wherein the fifth information includes the second data, and the second data includes at least one of the following: data network name, slice information, first service area, indication to use LADN mechanism, indication to use SMF control mechanism.

In the above solution, the first service area includes at least one of the following: a service area of a local area data network and a service area of a 5G virtual network group.

In the above solution, the data network name includes at least one of the following: a data network name (DNN) of a local area data network (LADN), and a data network name of a 5G virtual network group.

In the above solution, the method further includes:
pre-configuring the first network device with nineteenth information, wherein the nineteenth information indicates the LADN mechanism or indicates the SMF control mechanism.

In a second aspect, one embodiment of the present disclosure provides an information processing method, including:
obtaining, by a fourth network device, second data from a first network device, and establishing or not establishing a session for transmitting 5G virtual network group data or services, based on the second data; wherein the second data includes at least one the following: data network name, slice information, first service area, indication to use a local area data network (LADN) mechanism, and indication to use a session management function (SMF) control mechanism.

In the above solution, the method further includes:
receiving, by the fourth network device, sixth information, wherein the sixth information includes at least one of the following: data network name, slice information; and/or,
the sixth information further includes first location information of a first terminal or indication information indicating that a location of the first terminal is within a third service area.

In the above solution, the establishing a session for transmitting 5G virtual network group data or services, based on the second data, includes:
in case that the first location information of the first terminal is in the first service area, establishing, by the fourth network device, the session for transmitting 5G virtual network group data or services, based on the second data.

In the above solution, the not establishing a session for transmitting 5G virtual network group data or services, based on the second data, includes:
in case that the first location information of the first terminal is not in the first service area, terminating or refusing to establish the session for transmitting 5G virtual network group data or services, or not establishing the session for transmitting 5G virtual network group data or services.

In the above solution, the method further includes:
sending, by the fourth network device, seventh information to a third network device, wherein the seventh information is used to subscribe to location information of the first terminal.

In the above solution, the method further includes:
in case that a location of the first terminal changes, obtaining, by the fourth network device, second location information of the first terminal from the third network device; and/or,
in case that the second location information is not within the first service area, updating or deleting the session for transmitting 5G virtual network group data or services.

In the above solution, the method further includes:
sending, by the fourth network device, eighth information to a fifth network device, wherein the eighth information is used to configure, update or delete user plane communication of the 5G virtual network group or of 5G LAN service.

In the above solution, the first service area includes at least one of the following: a service area of a local area data network and a service area of a 5G virtual network group.

In the above solution, the data network name includes at least one of the following: a data network name (DNN) of a local area data network (LADN), and a data network name of a 5G virtual network group.

In the above solution, the method further includes:
in case that the number of the fourth network devices is multiple, exchanging context of the 5G virtual network group through ninth information.

In the above solution, the method further includes:
sending, by the fourth network device, sixteenth information to the first terminal, wherein the sixteenth information is used to indicate rejection of a session establishment request of the first terminal, or to indicate a reason for session release, or to indicate to initiate a session establishment request again after a period of time.

In the above solution, the sending, by the fourth network device, sixteenth information to the first terminal, includes:
sending, by the fourth network device, the sixteenth information to the first terminal through the third network device or an access network device.

In the above solution, the period of time is represented by a timer, or represented by a start moment and/or an end moment.

In the above solution, the period of time is configured by the second network device for the 5G network or 5G network function.

In the above solution, the method further includes:
sending, by the fourth network device, seventeenth information to the first terminal, wherein the seventeenth information is used to indicate the first terminal not to initiate a session establishment request.

In the above solution, the method further includes:
receiving, by the fourth network device, eighteenth information sent by the second network device, wherein the eighteenth information at least includes the service area of the 5G virtual network group.

In a third aspect, one embodiment of the present disclosure provides an information processing method, including:
sending, by a third network device, sixth information to a fourth network device; wherein the sixth information is used to request the fourth network device to establish a session for transmitting 5G virtual network group data or services, and the sixth information includes at least one of the following: data network name, slice information; and/or,
the sixth information further includes first location information of a first terminal or indication information indicating that a location of the first terminal is within a third service area.

In the above solution, the method further includes:
receiving, by the third network device, seventh information sent by the fourth network device, wherein the seventh information is used to subscribe to location information of the first terminal.

In the above solution, the method further includes:

In case that a location of the first terminal changes, sending, by the third network device, second location information of the first terminal to the fourth network device.

In the above solution, the method further includes:
obtaining, by the third network device, first data from a first network device, wherein the first data includes at least one of the following: data network name, first service area.

In the above solution, the method further includes:
receiving, by the third network device, tenth information sent by a sixth network device, wherein the tenth information includes a second service area.

In the above solution, the method further includes:
determining, by the third network device, a third service area based on the first service area and the second service area.

In the above solution, the method further includes:
sending, by the third network device, eleventh information to the first terminal, wherein the eleventh information at least includes the third service area.

In the above solution, in case that the location of the first terminal is in the third service area, the sixth information includes indication information indicating that the location of the first terminal is within the third service area.

In the above solution, the method further includes:
receiving, by the third network device, twelfth information from the first terminal, wherein the twelfth information is used to request to establish the session for transmitting 5G virtual network group data or services.

In the above solution, the twelfth information indicates that the location of the first terminal is in the third service area.

In the above solution, each of the first service area, the second service area, and the third service area includes at least one of the following: a service area of a local area data network and a service area of a 5G virtual network group.

In the above solution, the data network name includes at least one of the following: a data network name (DNN) of a local area data network (LADN), and a data network name of a 5G virtual network group.

In a fourth aspect, one embodiment of the present disclosure provides an information processing method, including:
in case that a first terminal is in a third service area, sending, by the first terminal, twelfth information to a third network device, wherein the twelfth information is used to request establish a session for transmitting 5G virtual network group data or services.

In the above solution, the method further includes:
receiving, by the first terminal, eleventh information sent by the third network device, wherein the eleventh information at least includes the third service area.

In the above solution, the third service area includes at least one of the following: a service area of a local area data network and a service area of a 5G virtual network group.

In a fifth aspect, one embodiment of the present disclosure provides an information processing method, including:
sending, by a third network device, fourteenth information to a first terminal; wherein the fourteenth information is used to indicate that the first terminal is in a service area of a 5G virtual network group, or to indicate that the first terminal is not in the service area of the 5G virtual network group, or to indicate the first terminal to initiate a session establishment request.

In the above solution, the method further includes:
receiving, by the third network device, fifteenth information sent by a second network device; wherein the fifteenth information includes at least one or more of the following:
a service area of the 5G virtual network group;
indication to use LADN mechanism;
indication to use SMF control mechanism.

In the above solution, the method further includes:
based on location information of the first terminal provided by an access network device and the service area of the 5G virtual network group, determining, by the third network device, that the first terminal is within the service area of the 5G virtual network group, or determining that the first terminal is not within the service area of the 5G virtual network group.

In the above solution, the sending, by a third network device, fourteenth information to a first terminal, includes:
when determining that the first terminal is in the service area of the 5G virtual network group, sending, by the third network device, to the first terminal, the fourteenth information used to indicate that the first terminal is in the service area of the 5G virtual network group; or,
when determining that the first terminal is not in the service area of the 5G virtual network group, sending, by the third network device, to the first terminal, the fourteenth information used to indicate that the first terminal is not in the service area of the 5G virtual network group.

In the above solution, the fourteenth information is used to indicate that the first terminal is in the service area of the 5G virtual network group, and/or is used to indicate the first terminal to initiate a session establishment request; the method further includes: receiving, by the third network device, a session establishment request from the first terminal.

In a sixth aspect, one embodiment of the present disclosure provides an information processing method, including:
sending, by a fourth network device, sixteenth information to a first terminal; wherein the sixteenth information is used to indicate rejection of a session establishment request of the first terminal, or to indicate a reason for session release, or to indicate to initiate a session establishment request again after a period of time; or,
sending, by the fourth network device, seventeenth information to the first terminal; wherein the seventeenth information is used to indicate the first terminal not to initiate a session establishment request.

In the above solution, the sending, by a fourth network device, sixteenth information to a first terminal, includes:
sending, by the fourth network device, the sixteenth information or the seventeenth information, to the first terminal through a third network device or an access network device.

In the above solution, the period of time is represented by a timer, or represented by a start moment and/or an end moment.

In the above solution, the period of time is configured by the second network device for the 5G network or 5G network function.

In the above solution, the method further includes:
receiving, by the fourth network device, eighteenth information sent by a second network device, wherein the eighteenth information at least includes a service area of the 5G virtual network group.

In a seventh aspect, one embodiment of the present disclosure provides an information processing method, including:
receiving, by a first terminal, fourteenth information sent by a third network device; wherein the fourteenth information is used to indicate that the first terminal is in a service area of a 5G virtual network group, or to indicate that the first terminal is not in the service area of the 5G virtual network group, or to indicate the first terminal to initiate a session establishment request; or,
receiving, by the first terminal, sixteenth information sent by a fourth network device; wherein the sixteenth information is used to indicate rejection of a session establishment request of the first terminal, or to indicate a reason for session release, or to indicate to initiate a session establishment request again after a period of time; or,
receiving, by the first terminal, seventeenth information sent by the fourth network device; wherein the seventeenth information is used to indicate the first terminal not to initiate a session establishment request.

In the above solution, the receiving, by the first terminal, sixteenth information sent by a fourth network device, includes:
receiving, by the first terminal, through the third network device or an access network device, the sixteenth information sent by the fourth network device; and/or,
the receiving, by the first terminal, the seventeenth information sent by the fourth network device, includes: receiving, by the first terminal, through the third network device or the access network device, the seventeenth information sent by the fourth network device.

In the above solution, the period of time is represented by a timer, or represented by a start moment and/or an end moment.

In the above solution, the period of time is configured by the second network device for the 5G network or 5G network function.

In the above solution, the method further includes:
based on the fourteenth information indicating that the first terminal is in the service area of the 5G virtual network group or indicating the first terminal to initiate a session establishment request, sending, by the first terminal, a session establishment request which is sent to the third network device through an access network device.

In the above solution, the method further includes:
based on the fourteenth information indicating that the first terminal is not in the service area of the 5G virtual network group, not sending, from the first terminal, a session establishment request.

In an eighth aspect, one embodiment of the present disclosure provides an information processing method, including:
sending, by a second network device, fifteenth information to a third network device, and/or sending eighteenth information to a fourth network device, wherein the fifteenth information and the eighteenth information at least include a service area of 5G virtual network group.

In an ninth aspect, one embodiment of the present disclosure provides an information processing device, including: a first receiving unit configured to receive first information sent by a second network device; wherein the first information at least includes a first service area, and the first information further includes at least one of the following: terminal information of a 5G virtual network group, data network name, slice information, indication to use a local area data network (LADN) mechanism, and indication to use a session management function (SMF) control mechanism.

In a tenth aspect, one embodiment of the present disclosure provides an information processing device, including: a first communication unit configured to obtain second data from a first network device, and establish or not establish a session for transmitting 5G virtual network group data or services, based on the second data; wherein the second data includes at least one the following: data network name, slice information, first service area, indication to use a local area data network (LADN) mechanism, and indication to use a session management function (SMF) control mechanism.

In an eleventh aspect, one embodiment of the present disclosure provides an information processing device, including: a second communication unit configured to send sixth information to a fourth network device; wherein the sixth information is used to request the fourth network device to establish a session for transmitting 5G virtual network group data or services, and the sixth information includes at least one of the following: data network name, slice information; and/or,
the sixth information further includes first location information of a first terminal or indication information indicating that a location of the first terminal is within a third service area.

In a twelfth aspect, one embodiment of the present disclosure provides an information processing device, including: a third communication unit configured to, in case that a first terminal is in a third service area, send twelfth information to a third network device, wherein the twelfth information is used to request establish a session for transmitting 5G virtual network group data or services.

In a thirteenth aspect, one embodiment of the present disclosure provides an information processing device, including: a fourth communication unit configured to send fourteenth information to a first terminal; wherein the fourteenth information is used to indicate that the first terminal is in a service area of a 5G virtual network group, or to indicate that the first terminal is not in the service area of the 5G virtual network group, or to indicate the first terminal to initiate a session establishment request.

In a fourteenth aspect, one embodiment of the present disclosure provides an information processing device, including: a fifth communication unit configured to send sixteenth information to a first terminal; wherein the sixteenth information is used to indicate rejection of a session establishment request of the first terminal, or to indicate a reason for session release, or to indicate to initiate a session establishment request again after a period of time; or, send seventeenth information to the first terminal; wherein the seventeenth information is used to indicate the first terminal not to initiate a session establishment request.

In a fifteenth aspect, one embodiment of the present disclosure provides an information processing device, including: a sixth communication unit configured to receive fourteenth information sent by a third network device; wherein the fourteenth information is used to indicate that the first terminal is in a service area of a 5G virtual network group, or to indicate that the first terminal is not in the service area of the 5G virtual network group, or to indicate the first terminal to initiate a session establishment request; or,
receive sixteenth information sent by a fourth network device; wherein the sixteenth information is used to indicate rejection of a session establishment request of the first terminal, or to indicate a reason for session release, or to indicate to initiate a session establishment request again after a period of time; or,
receive seventeenth information sent by the fourth network device; wherein the seventeenth information is used to indicate the first terminal not to initiate a session establishment request.

In a sixteenth aspect, one embodiment of the present disclosure provides an information processing device, including: a seventh communication unit configured to send fifteenth information to a third network device, and/or send eighteenth information to a fourth network device, wherein the fifteenth information and the eighteenth information at least include a service area of 5G virtual network group.

In a seventeenth aspect, one embodiment of the present disclosure provides a computer-readable storage medium, including a computer program stored thereon; wherein the program, when executed by a processor, causes the processor to perform steps of the method according to any one of the first to eighth aspects of the embodiments of the present disclosure.

In an eighteenth aspect, one embodiment of the present disclosure provides a communication equipment, including: a memory, a processor, and a computer program stored in the memory and executable on the processor; wherein the program, when executed by the processor, causes the processor to perform steps of the method according to any one of the first to eighth aspects of the embodiments of the present disclosure.

According to the information processing method, device, communication equipment and storage medium provided in the embodiments of the present disclosure, a first network device receives first information sent by a second network device; where the first information at least includes a first service area, and the first information further includes at least one of the following: terminal information of a 5G virtual network group, data network name, slice information, indication to use a local area data network (LADN) mechanism, and indication to use a session management function (SMF) control mechanism. A fourth network device obtains second data from the first network device, and establishes a session for transmitting 5G virtual network group data or services, based on the second data; where the second data includes at least one the following: data network name, slice information, first service area, indication to use a local area data network (LADN) mechanism, and indication to use a session management function (SMF) control mechanism. According to the technical solution of the embodiment of the present disclosure, the second network device configures the first service area into the first network device, thereby realizing establishment of a session for transmitting 5G virtual network group data or services based on the first service area, and then enabling the terminal to dynamically join the 5G virtual network group and implement intra-group communication.

### BRIEF DESCRIPTION OF THE DRAWINGS

FIG. 1 is a first schematic flowchart of an information processing method according to an embodiment of the present disclosure;
FIG. 2 is a second schematic flowchart of an information processing method according to an embodiment of the present disclosure;
FIG. 3 is a third schematic flowchart of an information processing method according to an embodiment of the present disclosure;
FIG. 4 is a fourth schematic flowchart of an information processing method according to an embodiment of the present disclosure;
FIG. 5 is a fifth schematic flowchart of an information processing method according to an embodiment of the present disclosure;
FIG. 6 is a sixth schematic flowchart of an information processing method according to an embodiment of the present disclosure;
FIG. 7 is a seventh schematic flowchart of an information processing method according to an embodiment of the present disclosure;
FIG. 8 is an eighth schematic flowchart of an information processing method according to an embodiment of the present disclosure;
FIG. 9 is a first schematic diagram showing interaction flow of an information processing method according to an embodiment of the present disclosure;
FIG. 10 is a second schematic diagram showing interaction flow of an information processing method according to an embodiment of the present disclosure;
FIG. 11 is a first schematic diagram of an information processing device according to an embodiment of the present disclosure;
FIG. 12 is a second schematic diagram of an information processing device according to an embodiment of the present disclosure;
FIG. 13 is a third schematic diagram of an information processing device according to an embodiment of the present disclosure;
FIG. 14 is a fourth schematic diagram of an information processing device according to an embodiment of the present disclosure;
FIG. 15 is a fifth schematic diagram of an information processing device according to an embodiment of the present disclosure;
FIG. 16 is a sixth schematic diagram of an information processing device according to an embodiment of the present disclosure;
FIG. 17 is a seventh schematic diagram of an information processing device according to an embodiment of the present disclosure;
FIG. 18 is an eighth schematic diagram of an information processing device according to an embodiment of the present disclosure; and
FIG. 19 is a schematic diagram showing hardware composition of a communication equipment according to an embodiment of the present disclosure.

### DETAILED DESCRIPTION

The present disclosure will be described in details hereinafter with reference to the accompanying drawings and specific embodiments.

The technical solutions of the embodiments of the present disclosure can be applied to various communication systems, such as global system of mobile communication (GSM) system, long term evolution (LTE) system or 5G system. Optionally, the 5G system or 5G network may also be referred as new radio (NR) system or NR network.

Exemplarily, the communication system to which the embodiments of the present disclosure are applied may include a network device and a terminal (which may also be referred as user equipment (UE), communication terminal, etc.). The network device may be a device that communicates with the user equipment. The network device can provide communication coverage within a certain area and communicate with terminals located in the area. Optionally, the network device may be a base station in each communication system, such as an evolutional Node B (eNB) in the LTE system, or a base station (gNB) in the 5G system or NR system.

It should be understood that in the embodiments of the present application, devices with communication functions in the network/system may be referred as communication equipment. The communication equipment may include network devices and terminals with communication functions. The network devices and terminal devices may be the specific devices described above, which will not be described again here. The communication equipment may also include other devices in the communication system, such as a network controller, a mobility management entity and other network entities, which are not limited in the embodiments of the present disclosure.

It should be understood that the terms "system" and "network" are often used interchangeably herein. The term "and/or" in this article is just an association relationship that describes related objects, indicating that there may be three relationships. For example, A and/or B may mean that A exists alone, A and B exist at the same time, and B exists alone. In addition, the character "/" in this article generally indicates that previous and next associated objects are in an "or" relationship.

The terms "first", "second", or the like, in the description and claims of the present application are used to distinguish similar objects and are not necessarily used to describe a specific order or sequence. It is to be understood that data so used are interchangeable under appropriate circumstances so that the embodiments of the application described herein can, for example, be practiced in sequences other than those illustrated or described herein. In addition, the terms "including" and "having" and any variations thereof are intended to cover non-exclusive inclusions, e.g., a process, method, system, product, or apparatus that includes a series of steps or units, is not necessarily limited to those steps or units explicitly listed, but may include other steps or units not explicitly listed or inherent to such process, method, product, or apparatus.

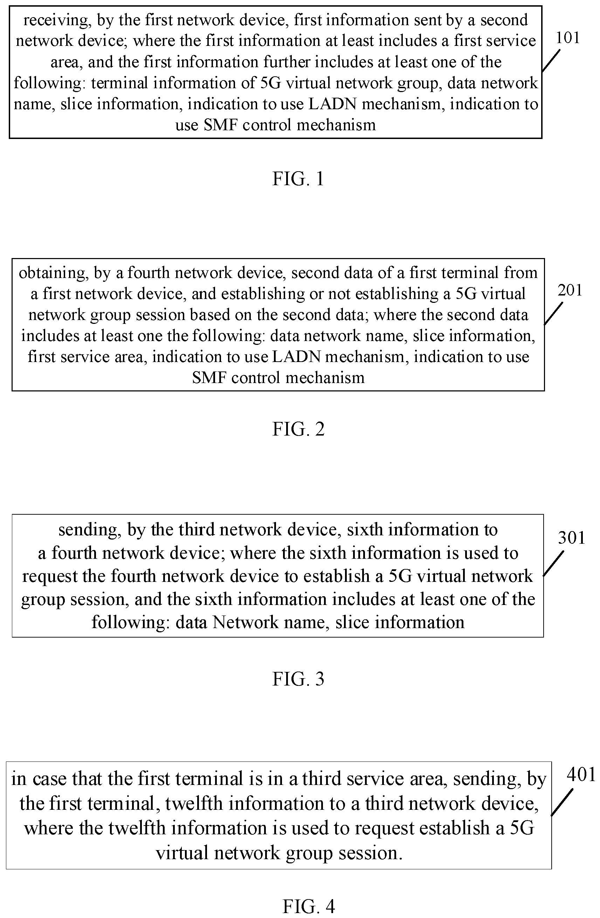

One embodiment of the present disclosure provides an information processing method, which is applied to a first network device. FIG. 1 is a first schematic flowchart of an information processing method according to an embodiment of the present disclosure. As shown in FIG. 1, the method includes:
Step 101: receiving, by the first network device, first information sent by a second network device; where the first information at least includes a first service area, and the first information further includes at least one of the following: terminal information of 5G virtual network group, data network name, slice information, indication to use LADN mechanism, indication to use SMF control mechanism.

In this embodiment, the first network device may be unified data management (UDM), and the second network device may be application function (AF). Then, exemplarily, UDM may receive, through a network exposure function (NEF), first information sent by the AF.

Exemplarily, the first network device may receive the first information through one message, that is, the first service area and at least one of the above information are received through one message. The first information may also be received through multiple messages, for example, the first service area is received through one message, and the at least one of the above information is received through another message, which is not limited in this embodiment.

The first information may also be referred as first configuration information, which is related information configured by the second network device to the first network device. The name of the first information is not limited in this embodiment of the present disclosure.

In this embodiment, the first information at least includes a first service area. Optionally, the first service area includes at least one of the following: a service area of a local area data network (LADN) and a service area of a 5G virtual network group (VN group).

In this embodiment, the above service area refers to a service area configured by the second network device into the first network device, which is recorded as the first service area. The first service area is used to represent a designated area range. Optionally, the first service area may specifically represent an area range of one or more designated paging areas.

In this embodiment, the first information further includes at least one of the following: terminal information of the 5G virtual network group, data network name, slice information, indication to use LADN mechanism, indication to use SMF control mechanism. For example, the above terminal information of the 5G virtual network group, data network name, slice information, indication to use LADN mechanism, indication to use SMF control mechanism are specifically configuration information for one or certain services or a certain large customer or enterprise customer. The SMF control mechanism means that the SMF determines whether to allow session establishment based on a UE location and the service area of the SMF, where the service area of the SMF may be the service area of the 5G virtual network group.

For example, the first information may include one or more pieces of slice information, one or more data network names corresponding to each piece of slice information, and terminal information authorized to use the slice.

In some optional embodiments, the data network name includes at least one of the following: a data network name (DNN) of a local area data network (LADN), a data network name of a 5G virtual network group.

In some optional embodiments of the present disclosure, the method further includes: receiving, by the first network device, second information sent by a third network device, where the second information is used to obtain first data of a first terminal; sending, by the first network device, third information to the third network device, where the third information includes the first data, and the first data includes at least one of the following: data network name and first service area.

In this embodiment, the third network device may specifically be an access and mobility management function (AMF). Optionally, during a device registration process initiated by the first terminal, the third network device obtains the first data of the first terminal from the first network device.

Optionally, after the first network device receives the second information sent by the third network device, the third information sent to the third network device may include subscription data of the first terminal. The subscription data may include the first data. It is to be understood that the above first data includes the data network name and/or the first service area supported by or authorized to the first terminal.

In some optional embodiments, the method may further include: receiving, by the first network device, second information, where the second information is used to obtain the first data of the first terminal; sending, by the first network device, third information, or, sending, by the first network device, third information to the third network device, where the third information includes the first data, and the first data includes at least one of the following: data network name and first service area.

In this embodiment, the second information may not be sent by the third network device, that is, the first network device receives the second information and sends the third information to the third network device. That is, the second information may be sent by other network devices, but the first network device sends the third information to the third network device. That is to say, the second information received by the first network device may not be limited to being sent by a certain network device (such as the third network device), and the second information is used to obtain the first data of the first terminal. Exemplarily, the second information comes from a network device different from the third network device, but the second information is used to obtain the first data of the first terminal, and the first network device sends the first data to the third network device based on the second information.

In some optional embodiments of the present disclosure, the method further includes: receiving, by the first network device, fourth information sent by a fourth network device, where the fourth information is used to obtain second data of the first terminal; sending, by the first network device, fifth information to the fourth network device, where the fifth information includes the second data, and the second data includes at least one of the following: data network name, slice information, first service area, indication to use LADN mechanism, indication to use SMF control mechanism.

In this embodiment, the fourth network device may specifically be a session management function (SMF). Optionally, during the session establishment process initiated by the first terminal, the fourth network device obtains the second data of the first terminal from the first network device.

Optionally, after the first network device receives the fourth information sent by the fourth network device, the fifth information sent to the fourth network device may include subscription data of the first terminal, and the subscription data may include the second data. It can be understood that the above second data includes at least one of the following items supported, subscribed or authorized to the first terminal: data network name, slice information, first service area.

In some optional embodiments, the method may further include: receiving, by the first network device, fourth information, where the fourth information is used to obtain second data of the first terminal; and sending, by the first network device, fifth information, or sending, by the first network device, the fifth information to the fourth network device, where the fifth information includes the second data, and the second data includes at least one of the following: data network name, slice information, the first service area.

In this embodiment, the fourth information may not be sent by the fourth network device, that is, the first network device receives the second information and sends the fifth information to the fourth network device. That is, the fourth information may be sent by other network devices, but the first network device sends the fifth information to the fourth network device. That is to say, the fourth information received by the first network device may not be limited to being sent by a certain network device (such as the fourth network device), and the fourth information is used to obtain the second data of the first terminal. Exemplarily, the fourth information comes from a network device different from the fourth network device, but the fourth information is used to obtain the second data of the first terminal, and the first network device sends the second data to the fourth network device based on the fourth information.

In some optional embodiments of the present disclosure, the method further includes: pre-configuring the first network device with nineteenth information, where the nineteenth information indicates a LADN mechanism or indicates an SMF control mechanism.

Based on the above embodiment, one embodiment of the present disclosure further provides an information processing method, which is applied to a second network device. FIG. 2 is a second schematic flowchart of an information processing method according to an embodiment of the present disclosure. As shown in FIG. 2, the method includes:
Step 201: obtaining, by a fourth network device, second data of a first terminal from a first network device, and establishing or not establishing a 5G virtual network group session based on the second data; where the second data includes at least one the following: data network name, slice information, first service area, indication to use LADN mechanism, indication to use SMF control mechanism.

The 5G virtual network group session may be a session for transmitting 5G virtual network group data or services.

In addition, the session for transmitting 5G virtual network group data or services may include at least one of the following: a session for transmitting 5G virtual network group data; a session for transmitting 5G virtual network group services.

In this embodiment, the fourth network device may be an SMF, and the first network device may be a UDM.

In this embodiment, the first network device obtains in advance first information configured by the second network device, and the first information at least includes first service area, and the first information further includes at least one of the following: terminal information of 5G virtual network group, data network name, slice information, indication to use LADN mechanism, indication to use SMF control mechanism.

Optionally, during a session establishment process initiated by the first terminal, the fourth network device obtains the second data of the first terminal from the first network device.

Exemplarily, obtaining, by the fourth network device, the second data of the first terminal from the first network device, includes: sending, by the fourth network device, fourth information to the first network device, where the fourth information is used to obtain second data of the first terminal; receiving, by the fourth network device, fifth information sent by the first network device, where the fifth information includes the second data.

In other embodiments, other network devices may also send the fourth information to the first network device, and the fourth network device receives the fifth information sent by the first network device, where the fifth information includes the second data.

Optionally, the first service area includes at least one of the following: a service area of a local area data network and a service area of a 5G virtual network group.

Optionally, the data network name includes at least one of the following: DNN of the LADN and data network name of the 5G virtual network group.

In this embodiment, the second data of the first terminal obtained by the fourth network device from the first network device is subscription data of the first terminal. It can be understood that the above second data includes at least one of the following items supported, subscribed or authorized to the first terminal: data network name, slice information, first service area. For example, the second data may be data in the first information configured in the first network device.

In this embodiment, based on the obtained second data of the first terminal, the fourth network device establishes or does not establish a 5G virtual network group session of the first terminal.

In some optional embodiments of the present disclosure, the method further includes: receiving, by the fourth network device, sixth information, where the sixth information includes at least one of the following: data network name, slice information; and/or, the sixth information further includes first location information of the first terminal or indication information indicating that a location of the first terminal is within a third service area.

Optionally, the fourth network device receives the sixth information sent by the third network device. For example, when the first terminal initiates a session establishment process, the first terminal sends a session establishment request to a third network device, and then the third network device sends a session establishment request to the fourth network device. The session establishment request may include the sixth information. Optionally, the third network device may be an AMF.

In this embodiment, the data network name and/or slice information included in the sixth information is the data network name and/or slice information carried in the session establishment request initiated by the first terminal; and the network data name and/or slice information included in the second data obtained by the fourth network device from the first network device is the network data name and/or slice information subscribed by the first terminal, and the two may be the same or different. Therefore, the data network name and/or slice information included in the sixth information, and the data network name and/or slice information included in the second data may be different information, or may be the same information.

In different implementations, the content carried by the sixth information may be different. In one implementation, the sixth information further includes first location information of the first terminal, so that the fourth network device determines whether to allow establishment of 5G virtual network group session for the first terminal based on the first location information and the second data. In another implementation, the sixth information further includes indication information indicating that a location of the first terminal is within a third service area; in this implementation, other device determines that the location of the first terminal is within the third service area, and thus there is no need for the fourth network device to make a judgment, but the fourth network device directly establishes a 5G virtual network group session for the first terminal.

In some optional embodiments of the present disclosure, the establishing a 5G virtual network group session based on the second data, includes: in case that the first location information of the first terminal is in the first service area, establishing, by the fourth network device, the 5G virtual network group session based on the second data.

In this embodiment, in the above first implementation, the fourth network device determines whether the first location information is within the first service area based on the first location information and the above second data; in case that the first location information is in the first service area, it is determined that establishment of a 5G virtual network group session for the first terminal is allowed, and the fourth network device establishes the 5G virtual network group session based on the second data; otherwise, in case that the first location information is not within the first service area, it is determined that establishment of a 5G virtual network group session for the first terminal is not allowed.

In some other optional embodiments, not establishing a 5G virtual network group session, includes: terminating or refusing to establish the 5G virtual network group session in case that the first location information of the first terminal is not within the first service area.

In this embodiment, when the fourth network device determines that establishment of the 5G virtual network group session for the first terminal is not allowed, the fourth network device terminates or refuses to establish the 5G virtual network group session for the first terminal, or does not establish the 5G virtual network group session.

In some optional embodiments of the present disclosure, the method further includes: sending, by the fourth network device, seventh information to the third network device, where the seventh information is used to subscribe to the location information of the first terminal.

In this embodiment, the fourth network device can subscribe to the third network device for location information of terminals (including the first terminal) through the seventh information, so that the fourth network device can obtain the location information of the terminals from the third network device. The third network device can obtain the location information of the terminals in advance.

In some optional embodiments of the present disclosure, the method further includes: in case that the location of the first terminal changes, obtaining, by the fourth network device, second location information of the first terminal from the third network device; and/or, in case that the second location information is not within the first service area, updating or deleting the 5G virtual network group session.

In this embodiment, for example, in case that the fourth network device has established a 5G virtual network group session based on the second data of the first terminal, if the location of the first terminal changes, the fourth network device may obtain the second location information of the first terminal based on a location subscription event from the third network device; determines whether the second location information is within the first service area based on the second data; in case that it is determined that the second location information is within the first service area, maintaining the 5G virtual network group session; in case that it is determined that the second location information is not within the first service area, updating or deleting the 5G virtual network group session.

In some optional embodiments of the present disclosure, the method further includes: sending, by the fourth network device, eighth information to the fifth network device, where the eighth information is used to configure, update or delete user plane communication of the 5G virtual network group or of 5G LAN service.

In this embodiment, the fifth network device may be a user plane function (UPF). The fourth network device sends to the fifth network device the eighth information for configuring, updating or deleting the user plane communication of the 5G virtual network group or the 5G LAN service. For example, the eighth information may be referred as an N4 rule policy information.

In some optional embodiments of the present disclosure, the method further includes: in case that the number of the fourth network devices is multiple, exchanging context of the 5G virtual network group through the ninth information.

In some optional embodiments of the present disclosure, the method further includes: sending, by the fourth network device, sixteenth information to the first terminal, where the sixteenth information is used to indicate rejection of a session establishment request of the first terminal, or to indicate a reason for session release, or to indicate to initiate a session establishment request again after a period of time.

In this embodiment, in case that the fourth network device determines not to establish the 5G virtual network group session, for example, when the first location information of the first terminal is not within the first service area, the fourth network device terminates or refuses to establish the 5G virtual network group session; or, the fourth network device does not establish the 5G virtual network group session, and further sends sixteenth information to the first terminal to indicate, through the sixteenth message, rejection of a session establishment request of the first terminal, or to indicate a reason for session release, or to indicate the first terminal to initiate a session establishment request again after a period of time.

Optionally, sending, by the fourth network device, sixteenth information to the first terminal, includes: sending, by the fourth network device, the sixteenth information to the first terminal through the third network device or an access network device.

Optionally, the period of time is represented by a timer, or represented by a start moment and/or an end moment.

Optionally, the period of time is configured by the second network device for the 5G network or 5G network function.

In some optional embodiments, the method further includes: sending, by the fourth network device, seventeenth information to the first terminal, where the seventeenth information is used to indicate the first terminal not to initiate a session establishment request.

In this embodiment, in case that the fourth network device determines not to establish a 5G virtual network group session, for example, when the first location information of the first terminal is not within the first service area, the fourth network device terminates or refuses to establish the 5G virtual network group session, or, the fourth network device does not establish the 5G virtual network group session, and further sends the seventeenth information to the first terminal to indicate the first terminal not to initiate a session establishment request.

In some optional embodiments, the method further includes: receiving, by the fourth network device, eighteenth information sent by the second network device, where the eighteenth information at least includes a service area of the 5G virtual network group.

In this embodiment, the second network device may be AF or NEF/AF.

Based on the above embodiments, one embodiment of the present disclosure further provides an information processing method, which is applied to a third network device. FIG. 3 is a third schematic flowchart of an information processing method according to an embodiment of the present disclosure. As shown in FIG. 3, the method includes:
Step 301: sending, by the third network device, sixth information to a fourth network device; where the sixth information is used to request the fourth network device to establish a 5G virtual network group session, and the sixth information includes at least one of the following: data Network name, slice information; and/or,
the sixth information further includes first location information of a first terminal or indication information indicating that a location of the first terminal is within a third service area.

In this embodiment, the third network device may be an AMF, and the fourth network device may be an SMF.

In this embodiment, when the first terminal initiates a session establishment process, the first terminal sends a session establishment request to the third network device, and then the third network device sends a session establishment request to the fourth network device. The session establishment request may include the sixth information. The data network name and/or slice information included in the sixth information is data network name and/or slice information carried in the session establishment request initiated by the first terminal.

In different implementations, the content carried by the sixth information may be different. In one implementation, the sixth information further includes first location information of the first terminal, so that the fourth network device determines whether to allow establishment of 5G virtual network group session for the first terminal based on the first location information and the second data. In another implementation, the sixth information further includes indication information indicating that a location of the first terminal is within a third service area; in this implementation, other device (such as the first terminal) determines that the location of the first terminal is within the third service area, and thus there is no need for the fourth network device to make a judgment, but the fourth network device directly establishes a 5G virtual network group session for the first terminal.

In some optional embodiments of the present disclosure, the method further includes: receiving, by the third network device, seventh information sent by the fourth network device, where the seventh information is used to subscribe to location information of the first terminal.

In this embodiment, the fourth network device can subscribe to the third network device for the location information of terminals (including the first terminal) through the seventh information, so that the fourth network device can obtain the location information of the terminals from the third network device. The third network device can obtain the location information of the terminals in advance.

In this embodiment, the third network device can obtain the location information of the terminals in advance. For example, the third network device may determine a location of a base station based on information of the base station (such as a base station identifier) that each UE accesses, and further determine the location information of the UE based on the location of the base station.

In some optional embodiments of the present disclosure, the method further includes: when the location of the first terminal changes, sending, by the third network device, second location information of the first terminal to the fourth network device.

In this embodiment, if the location of the first terminal changes, the third network device may send updated location information (i.e., the second location information) of the first terminal to the fourth network device, based on the location subscription event of the fourth network device, so that the fourth network device determines whether to update or delete the 5G virtual network group session of the first terminal based on the location of the first terminal.

In some optional embodiments of the present disclosure, the method further includes: obtaining, by the third network device, first data of the first terminal from the first network device, where the first data includes at least one of the following: data network name, first service area.

In this embodiment, the first network device obtains the first information configured by the second network device in advance; the first information at least includes the first service area; and the first information further includes at least one of the following: terminal information of 5G virtual network group, data network name, slice information. During the process of session establishment initiated by the first terminal, the third network device obtains the first data of the first terminal from the first network device. The first data is subscription data of the first terminal. It can be understood that the first data includes at least one of the following items supported, subscribed or authorized to the first terminal: data network name, first service area.

Optionally, the data network name included in the first data and the network data name included in the fifth information may be the same or different.

Exemplarily, the obtaining, by the third network device, the first data of the first terminal from the first network device, includes: sending, by the third network device, second information to the first network device, where the second information is used to obtain the first data of the first terminal; receiving, by the third network device, the third information sent by the first network device, where the third information includes the first data.

In other embodiments, other network devices may also send the above second information to the first network device, and the third network device receives the second information sent by the first network device, and the second information includes the first data.

In some optional embodiments, the data network name includes at least one of the following: DNN of the LADN and data network name of the 5G virtual network group.

In some optional embodiments of the present disclosure, the method further includes: receiving, by the third network device, tenth information sent by a sixth network device, where the tenth information includes a second service area.

In this embodiment, the sixth network device may specifically be an operation administration and maintenance (OAM) device, or may also be referred as an OAM control device. The third network device may also receive the tenth information configured by the sixth network device, where the tenth information at least includes the second service area.

In some optional embodiments of the present disclosure, the method further includes: determining, by the third network device, a third service area based on the first service area and the second service area.

In this embodiment, the third network device may compare the first service area configured by the second network device (such as AF) with the second service area configured by the sixth network device to determine the third service area. Optionally, if the first service area and the second service area are the same, the determined third service area may be the same as the first service area and the second service area. If the first service area and the second service area are different, the third service area may be equal to one service area with a smaller value among the first service area and the second service area.

Optionally, at least one of the first service area, the second service area and the third service area includes at least one of the following: a service area of a local area data network, a service area of a 5G virtual network group.

For example, the second service area may be a service area of a configured 5G virtual network group (VN group), and the first service area may be a service area of a configured local area data network (LADN). Then, the third network device can take the service area (second service area) of the 5G virtual network group (VN group) as the service area of the LADN, compare the second service area with the first service area to determine the third service area.

In some optional embodiments of the present disclosure, the method further includes: sending, by the third network device, eleventh information to the first terminal, where the eleventh information at least includes the third service area.

In this embodiment, the third network device may also send the determined third service area to the first terminal through the eleventh information, so that the first terminal can independently determine whether its location is within the third service area, and then determine whether to initiate a session establishment request according to a determination result.

Optionally, the method further includes: receiving, by the third network device, thirteenth information sent by the first terminal, where the thirteenth information is used to request device registration. The thirteenth information may include an identifier of the first terminal, so that the third network device can obtain first data of the first terminal from the first network device based on the identifier of the first terminal.

Optionally, the eleventh information may be information corresponding to the thirteenth information, or may be considered to be a device registration response corresponding to the device registration request, and the device registration response carries the third service area.

In some optional embodiments of the present disclosure, in case that the location of the first terminal is in the third service area, the sixth information includes indication information indicating that a location of the first terminal is within the third service area.

In this embodiment, the first terminal independently determines whether its location is within the third service area, and then determines whether to initiate a session establishment request based on the determination result. In this case, after receiving the session establishment request sent by the first terminal, the third network device sends sixth information to the fourth network device. The sixth information includes indication information indicating that a location of the first terminal is within the third service area.

In some optional embodiments of the present disclosure, the method further includes: receiving, by the third network device, twelfth information from the first terminal, where the twelfth information is used to request to establish a 5G virtual network group session.

In this embodiment, the third network device receives the twelfth information from the first terminal, that is, the first terminal initiates a session establishment request, and the third network device receives the session establishment request sent by the first terminal. In different implementations, the twelfth information represents different meanings.

In some optional embodiments, the twelfth information only represents a request to establish a 5G virtual network group session. After receiving the twelfth information, the third network device sends the sixth information to the fourth network device based on the request. In some other optional embodiments, the twelfth information also indicates that the location of the first terminal is within the third service area. This embodiment is applicable to the situation where the first terminal independently determines whether its location is within the third service area, and then determines whether to initiate a session establishment request based on the determination result. In this case, the third network device receives the session establishment request (or the twelfth information) sent by the first terminal. The twelfth information not only indicates a request to establish a 5G virtual network group session, the twelfth information also indicates that the location of the first terminal is within the third service area.

Based on the above embodiments, one embodiment of the present disclosure further provides an information processing method, which is applied in a UE (such as a first terminal). FIG. 4 is a fourth schematic flowchart of an information processing method according to an embodiment of the present disclosure. As shown in FIG. 4, the method includes:
Step 401: in case that the first terminal is in a third service area, sending, by the first terminal, twelfth information to a third network device, where the twelfth information is used to request establish a 5G virtual network group session.

In this embodiment, the first terminal autonomously determines whether its location is within the third service area, and then determines whether to initiate a 5G virtual network group session establishment request (or a session establishment request) based on the determination result. In this case, the twelfth information is used to request to establish a 5G virtual network group session on the one hand, and also indicates that the location of the first terminal is within the third service area.

In some optional embodiments, the method may further include: sending, by the first terminal, thirteenth information to the third network device, where the thirteenth information is used to request device registration. The thirteenth information may include an identifier of the first terminal, so that the third network device can obtain first data of the first terminal from the first network device based on the identifier of the first terminal.

In some optional embodiments of the present disclosure, the method further includes: receiving, by the first terminal, eleventh information sent by the third network device, where the eleventh information at least includes the third service area.

In this embodiment, the eleventh information may be information corresponding to the thirteenth information, or may be considered to be a device registration response corresponding to the device registration request, and the device registration response carries the third service area.

Optionally, the third service area includes at least one of the following: a service area of a local area data network and a service area of a 5G virtual network group.

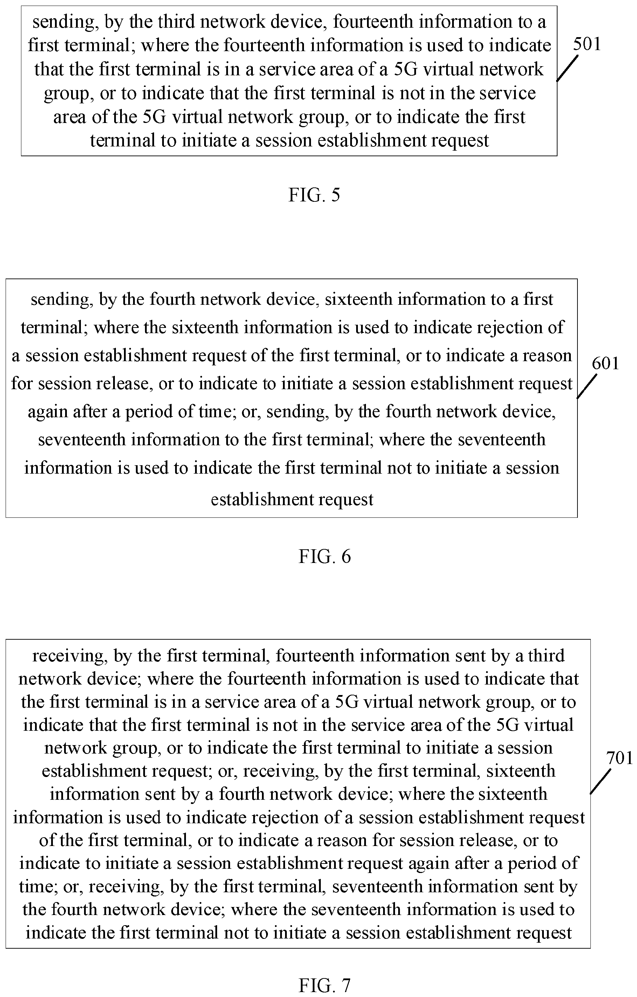

One embodiment of the present disclosure further provides an information processing method, applied to a third network device. FIG. 5 is a fifth schematic flowchart of an information processing method according to an embodiment of the present disclosure. As shown in FIG. 5, the method includes:
Step 501: sending, by the third network device, fourteenth information to a first terminal; where the fourteenth information is used to indicate that the first terminal is in a service area of a 5G virtual network group, or to indicate that the first terminal is not in the service area of the 5G virtual network group, or to indicate the first terminal to initiate a session establishment request.

In some optional embodiments of the present disclosure, the method further includes: receiving, by the third network device, fifteenth information sent by a second network device; where the fifteenth information includes at least one or more of the following:
a service area of the 5G virtual network group;
indication to use LADN mechanism;
indication to use SMF control mechanism.

In this embodiment, the SMF control mechanism means that the SMF determines whether to allow session establishment based on a UE location and the service area of the SMF, where the service area of the SMF may be the service area of the 5G virtual network group.

In some optional embodiments of the present disclosure, the method further includes: based on location information of the first terminal provided by an access network device and the service area of the 5G virtual network group, determining, by the third network device, that the first terminal is within the service area of the 5G virtual network group, or determining that the first terminal is not within the service area of the 5G virtual network group.

In some optional embodiments of the present disclosure, the sending, by the third network device, fourteenth information to the first terminal, includes: when determining that the first terminal is in the service area of the 5G virtual network group, sending, by the third network device, to the first terminal, the fourteenth information used to indicate that the first terminal is in the service area of the 5G virtual network group; or,
when determining that the first terminal is not in the service area of the 5G virtual network group, sending, by the third network device, to the first terminal, the fourteenth information used to indicate that the first terminal is not in the service area of the 5G virtual network group.

In some optional embodiments of the present disclosure, the fourteenth information is used to indicate that the first terminal is in the service area of the 5G virtual network group, and/or is used to indicate that the first terminal can initiate session establishment request. The method further includes: receiving, by the third network device, a session establishment request from the first terminal.

One embodiment of the present disclosure further provides an information processing method, applied to a fourth network device. FIG. 6 is a sixth schematic flowchart of an information processing method according to an embodiment of the present disclosure. As shown in FIG. 6, the method includes:
Step 601: sending, by the fourth network device, sixteenth information to a first terminal; where the sixteenth information is used to indicate rejection of a session establishment request of the first terminal, or to indicate a reason for session release, or to indicate to initiate a session establishment request again after a period of time; or,
sending, by the fourth network device, seventeenth information to the first terminal; where the seventeenth information is used to indicate the first terminal not to initiate a session establishment request.

In this embodiment, in case that the fourth network device determines not to establish a 5G virtual network group session, for example, when the first location information of the first terminal is not within the first service area, the fourth network device terminates or refuses to establish the 5G virtual network group session; or, the fourth network device does not establish the 5G virtual network group session, and further sends sixteenth information to the first terminal, to indicate, through the sixteenth message, rejection of a session establishment request of the first terminal, or to indicate a reason for session release, or to indicate the first terminal to initiate a session establishment request again after a period of time; or, the fourth network device sends the seventeenth information to the first terminal to indicate the first terminal not to initiate a session establishment request.

In some optional embodiments, sending, by the fourth network device, the sixteenth information to the first terminal, includes: sending, by the fourth network device, the sixteenth information or the seventeenth information, to the first terminal through a third network device or an access network device.

Optionally, the period of time is represented by a timer, or represented by a start moment and/or an end moment.

Optionally, the period of time is configured by the second network device for the 5G network or 5G network function.

In some optional embodiments, the method further includes: receiving, by the fourth network device, eighteenth information sent by the second network device, where the eighteenth information at least includes the service area of the 5G virtual network group.

In this embodiment, the second network device may be AF or NEF/AF.

Based on the above embodiments, one embodiment of the present disclosure further provides an information processing method, which is applied to a UE. FIG. 7 is a seventh schematic flowchart of an information processing method according to an embodiment of the present disclosure. As shown in FIG. 7, the method includes:
Step 701: receiving, by the first terminal, fourteenth information sent by a third network device; where the fourteenth information is used to indicate that the first terminal is in a service area of a 5G virtual network group, or to indicate that the first terminal is not in the service area of the 5G virtual network group, or to indicate the first terminal to initiate a session establishment request; or,
receiving, by the first terminal, sixteenth information sent by a fourth network device; where the sixteenth information is used to indicate rejection of a session establishment request of the first terminal, or to indicate a reason for session release, or to indicate to initiate a session establishment request again after a period of time; or,
receiving, by the first terminal, seventeenth information sent by the fourth network device; where the seventeenth information is used to indicate the first terminal not to initiate a session establishment request.

In some optional embodiments, the receiving, by the first terminal, the sixteenth information sent by the fourth network device, includes: receiving, by the first terminal, through the third network device or the access network device, the sixteenth information sent by the fourth network device; and/or,
the receiving, by the first terminal, the seventeenth information sent by the fourth network device, includes:
receiving, by the first terminal, through the third network device or the access network device, the seventeenth information sent by the fourth network device.

Optionally, the period of time is represented by a timer, or represented by a start moment and/or an end moment.

Optionally, the period of time is configured by the second network device for the 5G network or 5G network function.

In some optional embodiments, the method further includes: based on the fourteenth information indicating that the first terminal is in the service area of the 5G virtual network group or indicating the first terminal to initiate a session establishment request, sending, by the first terminal, a session establishment request which is sent to the third network device through the access network device.

In some other optional embodiments, the method further includes: based on the fourteenth information indicating that the first terminal is not in the service area of the 5G virtual network group, not sending, from the first terminal, a session establishment request.

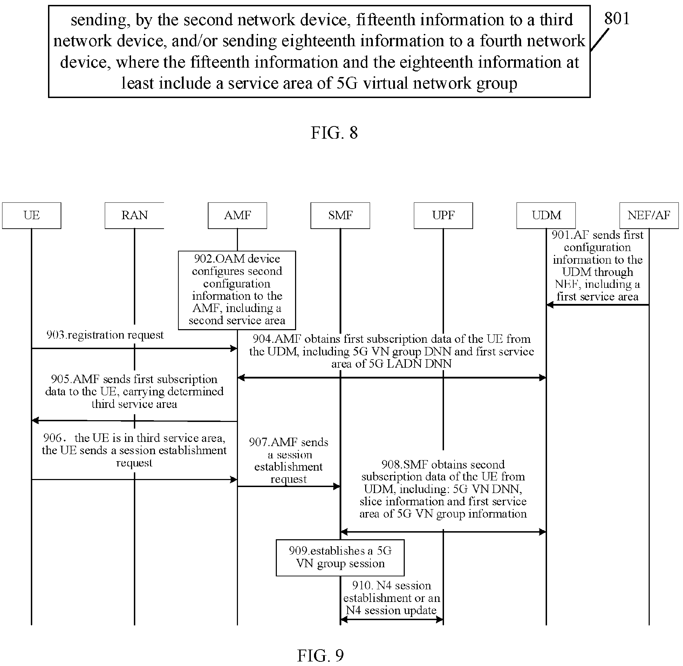

One embodiment of the present disclosure further provides an information processing method, applied to a second network device. FIG. 8 is an eighth schematic flowchart of an information processing method according to an embodiment of the present disclosure. As shown in FIG. 8, the method includes:
Step 801: sending, by the second network device, fifteenth information to a third network device, and/or sending eighteenth information to a fourth network device, where the fifteenth information and the eighteenth information at least include a service area of 5G virtual network group.

The information processing method according to the embodiment of the present disclosure will be described hereinafter with reference to specific examples. In the following example, the first network device is UDM, the second network device is AF, the third network device is AMF, the fourth network device is SMF, the fifth network device is UPF, the sixth network device is OAM device, the first terminal is user equipment (UE).

### Example 1

FIG. 9 is a first schematic diagram showing interaction flow of an information processing method according to an embodiment of the present disclosure. As shown in FIG. 9, the method includes:

At step 901, the AF sends first configuration information to the UDM through NEF, where the first configuration information may include 5G VN group information, including generic public subscription identifier (GPSI) of the UE in the 5G VN group, DNN, single network slice selection assistance information (S-NSSAI) and a service area (recorded as a first service area).

Here, the first configuration information is equivalent to the first information in the aforementioned embodiment.

At step 902, the OAM device configures second configuration information to the AMF. The second configuration information may include a service area (recorded as a second service area) of the 5G VN group, and the service area of the 5G VN group is used as the service area of the LADN.

Here, the second configuration information is equivalent to the tenth information in the aforementioned embodiment.

At step 903, the UE initiates a registration request, which is used to request device registration.

At step 904, after receiving the registration request, the AMF interacts with the UDM and obtains first subscription data (equivalent to the above first data) of the UE from the UDM. The obtained data includes 5G VN group DNN (i.e., 5G LADN DNN), and the service area of 5G LADN DNN (first service area).

At step 905, the AMF sends the above first subscription data to the UE, including the 5G VN group DNN (i.e., 5G LADN DNN) and service area (third service area).

Here, the AMF obtains the first service area configured by the AF and the second service area configured by the OAM device, compares the first service area with the second service area to determine the third service area. For example, if the first service area and the second service area are the same, the determined third service area may be the same as the first service area and the second service area. If the first service area and the second service area are different, the third service area may be equal to one service area with a smaller value among the first service area and the second service area.

At step 906, when the UE is in the 5G VN group (i.e., 5G LADN) service area (the third service area), the UE sends a session establishment request, and the session establishment request is used to request to establish a 5G VN group session.

Optionally, the session establishment request may include the DNN and/or S-NSSAI requested by the UE.

In this example, the UE determines whether to initiate a session establishment request based on the obtained third service area. Exemplarily, the UE obtains its location information and determines whether its location information is within the third service area; when determining that its location information is within the third service area, the UE sends a session establishment request. Correspondingly, when determining that its location information is not within the third service area, the UE does not send a session establishment request.

Here, the session establishment request is equivalent to the twelfth information in the aforementioned embodiment.

At step 907, the AMF sends a session establishment request to the SMF. The session establishment request may include the DNN and/or S-NSSAI requested by the UE. Optionally, the session establishment request further includes indication information indicating that the UE is in the 5G LADN service area (i.e., the service area of the 5G VN group, that is, the third service area).

Here, the session establishment request is equivalent to the sixth information in the aforementioned embodiment.

At step 908, the SMF interacts with UDM and obtains second subscription data (equivalent to the above second data) of the UE from UDM. The obtained data includes 5G VN DNN, slice information (such as S-NSSAI), and 5G VN group information (including the first service area).

At step 909, the SMF establishes a 5G VN group session.

At step 910, the SMF initiates an N4 session establishment or an N4 session update to the UPF, to configure or update user plane communication of the relevant 5G VN group or 5G LAN service.

Here, the above N4 session establishment or N4 session update is equivalent to the eighth information in the aforementioned embodiment.

### Example 2

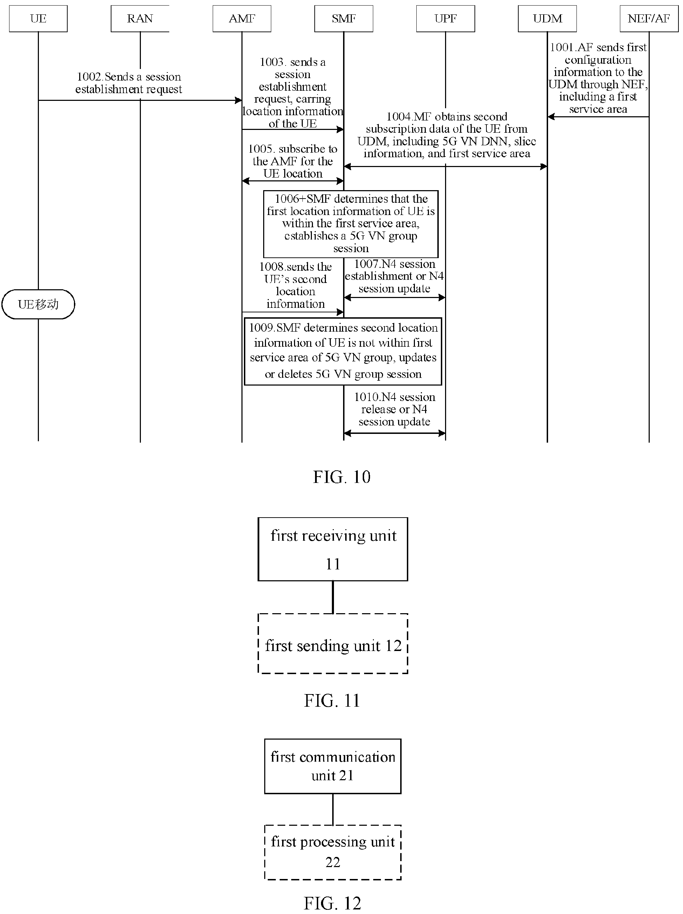

FIG. 10 is a second schematic diagram showing interaction flow of an information processing method according to an embodiment of the present disclosure. As shown in FIG. 10, the method includes:

At step 1001, the AF sends first configuration information to UDM through NEF, where the first configuration information may include 5G VN group information, including generic public subscription identifier (GPSI) of the UE in the 5G VN group, DNN, single network slice selection assistance information (S-NSSAI) and a service area (recorded as a first service area).

Here, the first configuration information is equivalent to the first information in the aforementioned embodiment.

At step 1002, the UE sends a session establishment request, which is used to request to establish a 5G VN group session.

Optionally, the session establishment request may include the DNN and/or S-NSSAI requested by the UE.

Here, the session establishment request initiated by the UE is equivalent to the twelfth information in the aforementioned embodiment.

At step 1003, the AMF sends a session establishment request to the SMF. The session establishment request may include the DNN and/or S-NSSAI requested by the UE. The session establishment request further carries location information of the UE (recorded as the first location information).

Here, the session establishment request is equivalent to the sixth information in the aforementioned embodiment.

At step 1004, the SMF interacts with UDM and obtains second subscription data (equivalent to the above second data) of the UE from UDM. The obtained data includes 5G VN DNN, slice information (such as S-NSSAI), and 5G VN group information (including the first service area).

At step 1005, the SMF subscribes to the AMF for the UE location.

At step 1006, the SMF determines whether the UE's location information (first location information) is within the 5G VN group service area (first service area). If the first location information is within the first service area, the SMF establishes a 5G VN group session.

At step 1007, the SMF initiates an N4 session establishment or an N4 session update to the UPF, to configure or update user plane communication of the relevant 5G VN group or 5G LAN service.

Here, the above N4 session establishment or N4 session update is equivalent to the eighth information in the aforementioned embodiment.

At step 1008, when the UE moves out of the first service area, the AMF sends the UE's location information (second location information) to the SMF.

At step 1009, the SMF determines whether the UE's location information (second location information) is within the 5G VN group service area (first service area). If the second location information is not within the 5G VN group service area (first service area), the SMF updates or deletes 5G VN group session.

At step 1010, the SMF initiates an N4 session release or an N4 session update to the UPF, to delete or update the user plane communication of the relevant 5G VN group or 5G LAN service.

Here, deleting or updating the user plane communication of the relevant 5G VN group or 5G LAN service may include deleting or updating local forwarding information on the UPF, and/or deleting or updating N19 tunnel on the UPF.

According to the technical solution of the embodiment of the present disclosure, the second network device configures the first service area into the first network device, thereby realizing establishment of a 5G virtual network group session based on the first service area, and then enabling the terminal to dynamically join the 5G virtual network group and implement intra-group communication.

In actual needs, in case that a terminal is in a specific location, it is a realistic need for the terminal to dynamically join a 5G VN group and achieve direct communication within the group. For example, in a factory, a terminal located in the factory needs to dynamically register the terminal to access the factory-specific 5G VN group, and implement the characteristics of the 5G VN group such as supporting direct communication between terminals. When the terminal moves out of the factory, the corresponding protocol data unit (PDU) session is released, or the session is updated. Therefore, the embodiments of the present disclosure enable the terminal in such scenarios to dynamically join the 5G virtual network group and implement intra-group communication.

One embodiment of the present disclosure further provides an information processing device, which is applied in a first network device. FIG. 11 is a first schematic diagram of an information processing device according to an embodiment of the present disclosure. As shown in FIG. 11, the device includes a first receiving unit 11 for receiving first information sent by a second network device. The first information at least includes a first service area, and the first information further includes at least one of the following: terminal information of 5G virtual network group, data network name, slice information, indication to use LADN mechanism, indication to use SMF control mechanism.

In some optional embodiments of the present disclosure, the device further includes a first sending unit 12.

The first receiving unit 11 is further used to receive second information sent by a third network device, where the second information is used to obtain first data.

The first sending unit 12 is used to send third information to the third network device, where the third information includes the first data, and the first data includes at least one of the following: data network name, first service area, slice information.

In some optional embodiments of the present disclosure, the device further includes a first sending unit 12;
the first receiving unit 11 is further used to receive fourth information sent by a fourth network device, where the fourth information is used to obtain second data;
the first sending unit 12 is used to send fifth information to the fourth network device, where the fifth information includes the second data, and the second data includes at least one of the following: data network name, slice information, first service area, indication to use LADN mechanism, indication to use SMF control mechanism.

In some optional embodiments of the present disclosure, the first service area includes at least one of the following: a service area of a local area data network and a service area of a 5G virtual network group.

In some optional embodiments of the present disclosure, the data network name includes at least one of the following: DNN of LADN, data network name of the 5G virtual network group.

In some optional embodiments of the present disclosure, the device further includes a pre-configuration unit for preconfiguring nineteenth information, where the nineteenth information indicates the LADN mechanism or indicates the SMF control mechanism.

In the embodiment of the present disclosure, the pre-configuration unit in the device may be implemented by a central processing unit (CPU), a digital signal processor (DSP), a microcontroller unit (MCU) or Field-Programmable gate array (FPGA) in practical applications. The first receiving unit 11 and the first sending unit 12 in the device may be implemented by communication modules (including: basic communication suite, operating system, communication module, standardized interface and protocol, etc.) and transceiver antennas in practical applications.

One embodiment of the present disclosure further provides an information processing device, which is applied in a fourth network device. FIG. 12 is a second schematic diagram of an information processing device according to an embodiment of the present disclosure. As shown in FIG. 12, the device includes a first communication unit 21 for obtaining second data from a first network device, and establishing or not establishing a 5G virtual network group session based on the second data; where the second data includes at least one the following: data network name, slice information, first service area, indication to use LADN mechanism, indication to use SMF control mechanism.

In some optional embodiments of the present disclosure, the first communication unit 21 is further used to receive sixth information, where the sixth information includes at least one of the following: data network name, slice information; and/or,
the sixth information further includes first location information of the first terminal or indication information indicating that a location of the first terminal is within a third service area.

In some optional embodiments of the present disclosure, the device further includes a first processing unit 22 for determining whether the first location information of the first terminal is within the first service area.

The first communication unit 21 is used to establish a 5G virtual network group session based on the second data when the first location information of the first terminal is within the first service area.

In some optional embodiments of the present disclosure, the first communication unit 21 is used to terminate or refuse to establish a 5G virtual network group session in case that the first location information of the first terminal is not within the first service area, or not establish a 5G virtual network group session.

In some optional embodiments of the present disclosure, the first communication unit 21 is further used to send seventh information to a third network device, where the seventh information is used to subscribe to location information of the first terminal.

In some optional embodiments of the present disclosure, the device further includes a first processing unit 22.

The first communication unit 21 is further used to, in case that the location of the first terminal changes, obtain second location information of the first terminal from the third network device; and/or,
the first processing unit 22 is used to update or delete the 5G virtual network group session in case that the second location information is not within the first service area.

In some optional embodiments of the present disclosure, the first communication unit 21 is further used to send eighth information to a fifth network device, where the eighth information is used to configure, update or delete user plane communication of the 5G virtual network group or of 5G LAN service.

In some optional embodiments of the present disclosure, the first service area includes at least one of the following: a service area of a local area data network and a service area of a 5G virtual network group.

In some optional embodiments of the present disclosure, the data network name includes at least one of the following: data network name (DNN) of a local area data network (LADN), and a data network name of the 5G virtual network group.

In some optional embodiments of the present disclosure, the first communication unit 21 is further used to, in case that the number of the fourth network devices is multiple, exchange context of the 5G virtual network group through the ninth information.

In some optional embodiments of the present disclosure, the first communication unit 21 is further used to send sixteenth information to the first terminal, where the sixteenth information is used to indicate rejection of a session establishment request of the first terminal, or to indicate a reason for session release, or to indicate to initiate a session establishment request again after a period of time.

In some optional embodiments of the present disclosure, the first communication unit 21 is used to send the sixteenth information to the first terminal through the third network device or an access network device.

Optionally, the period of time is represented by a timer, or represented by a start moment and/or an end moment.

Optionally, the period of time is configured by the second network device for the 5G network or 5G network function.

In some optional embodiments of the present disclosure, the first communication unit 21 is further used to send seventeenth information to the first terminal, where the seventeenth information is used to indicate the first terminal not to initiate a session establishment request.

In some optional embodiments of the present disclosure, the first communication unit 21 is further used to receive eighteenth information sent by the second network device, where the eighteenth information at least includes the service area of the 5G virtual network group.

In the embodiment of the present disclosure, the first processing unit 22 in the device may be implemented by a central processing unit (CPU), a digital signal processor (DSP), a microcontroller unit (MCU) or Field-Programmable gate array (FPGA) in practical applications. The first communication unit 21 in the device may be implemented by communication modules (including: basic communication suite, operating system, communication module, standardized interface and protocol, etc.) and transceiver antennas in practical applications.

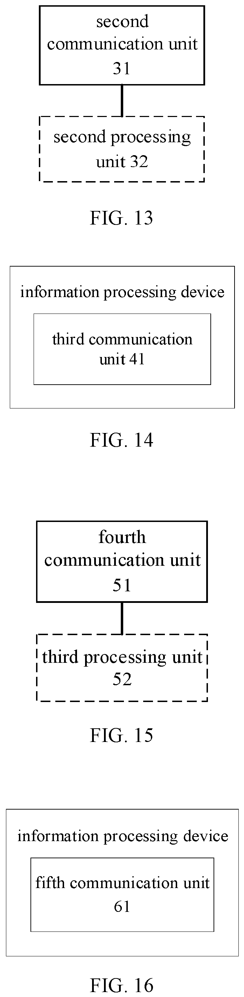

One embodiment of the present disclosure further provides an information processing device, which is applied to a third network device. FIG. 13 is a third schematic diagram of an information processing device according to an embodiment of the present disclosure. As shown in FIG. 13, the device includes a second communication unit 31 for sending sixth information to a fourth network device, where the sixth information is used to request the fourth network device to establish a 5G virtual network group session, and the sixth information includes at least one of the following: data Network name, slice information; and/or,
the sixth information further includes first location information of a first terminal or indication information indicating that a location of the first terminal is within a third service area.

In some optional embodiments of the present disclosure, the second communication unit 31 is further used to receive seventh information sent by the fourth network device, where the seventh information is used to subscribe to location information of the first terminal.

In some optional embodiments of the present disclosure, the second communication unit 31 is further used to, when the location of the first terminal changes, send second location information of the first terminal to the fourth network device.

In some optional embodiments of the present disclosure, the second communication unit 31 is further used to obtain first data from the first network device, where the first data includes at least one of the following: data network name, first service area.

In some optional embodiments of the present disclosure, the second communication unit 31 is further used to receive tenth information sent by a sixth network device, where the tenth information includes the second service area.

In some optional embodiments of the present disclosure, the device further includes a second processing unit 32 for determining a third service area based on the first service area and the second service area.

In some optional embodiments of the present disclosure, the second communication unit 31 is further used to send eleventh information to the first terminal, where the eleventh information at least includes the third service area.

In some optional embodiments of the present disclosure, when the location of the first terminal is in the third service area, the sixth information includes indication information indicating that a location of the first terminal is within the third service area.

In some optional embodiments of the present disclosure, the second communication unit 31 is further used to receive twelfth information from the first terminal, where the twelfth information is used to request to establish a 5G virtual network group session.

In some optional embodiments of the present disclosure, the twelfth information indicates that the location of the first terminal is within the third service area.

In some optional embodiments of the present disclosure, each of at least one of the first service area, the second service area and the third service area includes at least one of the following: a service area of a local area data network, a service area of the 5G virtual network group.

In some optional embodiments of the present disclosure, the data network name includes at least one of the following: DNN of LADN, data network name of the 5G virtual network group.

In the embodiment of the present disclosure, the second processing unit 32 in the device may be implemented by a central processing unit (CPU), a digital signal processor (DSP), a microcontroller unit (MCU) or field-programmable gate array (FPGA) in practical applications. The second communication unit 31 in the device may be implemented by communication modules (including: basic communication suite, operating system, communication module, standardized interface and protocol, etc.) and transceiver antennas in practical applications.

One embodiment of the present disclosure further provides an information processing device, which is applied to a terminal. FIG. 14 is a fourth schematic diagram of an information processing device according to an embodiment of the present disclosure. As shown in FIG. 14, the device includes a third communication unit 41 for sending twelfth information to a third network device in case that the first terminal is in a third service area, where the twelfth information is used to request establish a 5G virtual network group session.

In some optional embodiments of the present disclosure, the third communication unit 41 is further used to receive eleventh information sent by the third network device, where the eleventh information at least includes the third service area.

In some optional embodiments of the present disclosure, the third service area includes at least one of the following: a service area of a local area data network and a service area of a 5G virtual network group.

In the embodiment of the present disclosure, the third communication unit 41 in the device may be implemented by communication modules (including: basic communication suite, operating system, communication module, standardized interface and protocol, etc.) and transceiver antennas in practical applications.

One embodiment of the present disclosure further provides an information processing device, which is applied to a third network device. FIG. 15 is a fifth schematic diagram of an information processing device according to an embodiment of the present disclosure. As shown in FIG. 15, the device includes a fourth communication unit 51 for sending fourteenth information to a first terminal, where the fourteenth information is used to indicate that the first terminal is in a service area of a 5G virtual network group, or to indicate that the first terminal is not in the service area of the 5G virtual network group, or to indicate the first terminal to initiate a session establishment request.

In some optional embodiments of the present disclosure, the fourth communication unit 51 is further used to receive fifteenth information sent by the second network device, where the fifteenth information includes at least one or more of the following:
a service area of the 5G virtual network group;
indication to use LADN mechanism;
indication to use SMF control mechanism.

In some optional embodiments of the present disclosure, the device further includes a third processing unit 52 used for determining that the first terminal is within the service area of the 5G virtual network group or determining that the first terminal is not within the service area of the 5G virtual network group, based on location information of the first terminal provided by an access network device and the service area of the 5G virtual network group.

In some optional embodiments of the present disclosure, the fourth communication unit 51 is used to, when determining that the first terminal is in the service area of the 5G virtual network group, send to the first terminal, the fourteenth information used to indicate that the first terminal is in the service area of the 5G virtual network group; or, when determining that the first terminal is not in the service area of the 5G virtual network group, send, to the first terminal, the fourteenth information used to indicate that the first terminal is not in the service area of the 5G virtual network group.

In some optional embodiments of the present disclosure, the fourth communication unit 51 is further used to receive a session establishment request from the first terminal, when the fourteenth information is used to indicate that the first terminal is in the service area of the 5G virtual network group, and/or is used to indicate that the first terminal can initiate session establishment request.

In the embodiment of the present disclosure, the third processing unit 52 in the device may be implemented by a central processing unit (CPU), a digital signal processor (DSP), a microcontroller unit (MCU) or field-programmable gate array (FPGA) in practical applications. The fourth communication unit 51 in the device may be implemented by communication modules (including: basic communication suite, operating system, communication module, standardized interface and protocol, etc.) and transceiver antennas in practical applications.

One embodiment of the present disclosure further provides an information processing device, which is applied to a fourth network device. FIG. 16 is a sixth schematic diagram of an information processing device according to an embodiment of the present disclosure. As shown in FIG. 16, the device includes a fifth communication unit 61 for sending sixteenth information to a first terminal, where the sixteenth information is used to indicate rejection of a session establishment request of the first terminal, or to indicate a reason for session release, or to indicate to initiate a session establishment request again after a period of time; or, sending seventeenth information to the first terminal, where the seventeenth information is used to indicate the first terminal not to initiate a session establishment request.

In some optional embodiments of the present disclosure, the fifth communication unit 61 is used to send the sixteenth information or the seventeenth information, to the first terminal through a third network device or an access network device.

Optionally, the period of time is represented by a timer, or represented by a start moment and/or an end moment.

Optionally, the period of time is configured by the second network device for the 5G network or 5G network function.

In some optional embodiments of the present disclosure, the fifth communication unit 61 is further used to receive eighteenth information sent by the second network device, where the eighteenth information at least includes the service area of the 5G virtual network group.

In the embodiment of the present disclosure, the fifth communication unit 61 in the device may be implemented by communication modules (including: basic communication suite, operating system, communication module, standardized interface and protocol, etc.) and transceiver antennas in practical applications.

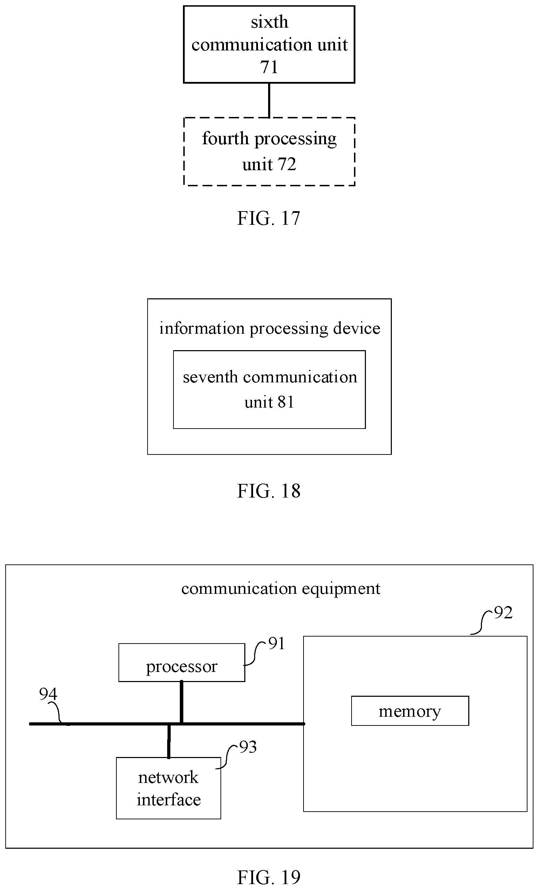

One embodiment of the present disclosure further provides an information processing device, which is applied to a terminal. FIG. 17 is a seventh schematic diagram of an information processing device according to an embodiment of the present disclosure. As shown in FIG. 17, the device includes a sixth communication unit 71 for receiving fourteenth information sent by a third network device; where the fourteenth information is used to indicate that the first terminal is in a service area of a 5G virtual network group, or to indicate that the first terminal is not in the service area of the 5G virtual network group, or to indicate the first terminal to initiate a session establishment request; or,
receiving sixteenth information sent by a fourth network device; where the sixteenth information is used to indicate rejection of a session establishment request of the first terminal, or to indicate a reason for session release, or to indicate to initiate a session establishment request again after a period of time; or,
receiving seventeenth information sent by the fourth network device; where the seventeenth information is used to indicate the first terminal not to initiate a session establishment request.

In some optional embodiments of the present disclosure, the sixth communication unit 71 is used to receive, through the third network device or the access network device, the sixteenth information sent by the fourth network device; and/or, receive, through the third network device or the access network device, the seventeenth information sent by the fourth network device.

Optionally, the period of time is represented by a timer, or represented by a start moment and/or an end moment.

Optionally, the period of time is configured by the second network device for the 5G network or 5G network function.

In some optional embodiments of the present disclosure, the device further includes a fourth processing unit 72 used for, based on the fourteenth information indicating that the first terminal is in the service area of the 5G virtual network group or indicating the first terminal to initiate a session establishment request, sending a session establishment request which is sent to the third network device through the access network device.

In some optional embodiments of the present disclosure, the device further includes a fourth processing unit 72 used for, based on the fourteenth information indicating that the first terminal is not in the service area of the 5G virtual network group, not sending a session establishment request.

In the embodiment of the present disclosure, the fourth processing unit 72 in the device may be implemented by a central processing unit (CPU), a digital signal processor (DSP), a microcontroller unit (MCU) or field-programmable gate array (FPGA) in practical applications. The sixth communication unit 71in the device may be implemented by communication modules (including: basic communication suite, operating system, communication module, standardized interface and protocol, etc.) and transceiver antennas in practical applications.

One embodiment of the present disclosure further provides an information processing device, which is applied to a second network device. FIG. 18 is an eighth schematic diagram of an information processing device according to an embodiment of the present disclosure. As shown in FIG. 18, the device includes a seventh communication unit 81 used for sending fifteenth information to a third network device, and/or sending eighteenth information to a fourth network device, where the fifteenth information and the eighteenth information at least include a service area of 5G virtual network group.

In the embodiment of the present disclosure, the seventh communication unit 81 in the device may be implemented by communication modules (including: basic communication suite, operating system, communication module, standardized interface and protocol, etc.) and transceiver antennas in practical applications.

It should be noted that when the information processing device in the above embodiment performs information processing, the division of the above program modules is only used as an example. In practical applications, the above processing can be allocated to different program modules as needed. That is, the internal structure of the device is divided into different program modules to complete all or part of the processing described above. In addition, the information processing device provided in the above embodiments and the information processing method embodiments belong to the same concept, and the specific implementation process thereof can refer to the method embodiment, which will not be repeated here.

One embodiment of the present disclosure further provides a communication equipment, where the communication device is a first network device, a third network device, a fourth network device, a second network device or a terminal (first terminal). FIG. 19 is a schematic diagram showing hardware composition of a communication equipment according to an embodiment of the present disclosure. As shown in FIG. 19, the communication equipment includes a memory 92, a processor 91 and a computer program stored in the memory 92 and executable on the processor 91. The processor 91 executes the program to implement the steps of the information processing method applied to the first network device; or, the processor 91 executes the program to implement the information processing method applied to the fourth network device; or, the processor 91 executes the program to implement the information processing method applied to the third network device; or, the processor 91 executes the program to implement the information processing method applied to the first terminal; or, the processor 91 executes the program to implement the information processing method applied to the second network device.

Optionally, the communication equipment further includes at least one network interface 93. Various components in node devices are coupled together through the bus system 94. It can be understood that a bus system 94 is used to implement connection communications between these components. In addition to data bus, the bus system 94 further includes a power bus, a control bus and a status signal bus. However, for the sake of clarity, the various buses are represented by the bus system 94 in FIG. 19.

It is to be appreciated that the memory 92 may be either volatile memory or non-volatile memory, and may include both volatile and non-volatile memories. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a disc, or compact disc read-only memory (CD-ROM). The magnetic surface memory may be a magnetic disk memory or a magnetic tape memory. The volatile memory may be a random access memory (RAM), which is used as an external cache memory. By way of example and not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), sync Link dynamic random access memory (SLDRAM), direct rambus random access memory (DRRAM). The memory 92 described in the embodiments of the present application is intended to include, but not be limited to, these and any other suitable types of memory.

The methods disclosed in the foregoing embodiments of the present application may be applied to the processor 91 or implemented by the processor 91. The processor 91 may be an integrated circuit chip with signal processing capabilities. During implementation, each step of the foregoing method may be completed by an integrated logic circuit of hardware in the processor 91 or instructions in the form of software. The foregoing processor 91 may be a general-purpose processor, DSP, or other programmable logic devices, discrete gate or transistor logic devices, discrete hardware components, and the like. The processor 91 can implement or perform various methods, steps and logic block diagrams disclosed in the embodiments of the present application. The general-purpose processor may be a microprocessor or any conventional processor or the like. The steps of the method disclosed in the embodiments of the present application may be directly implemented by a hardware decoding processor, or implemented by a combination of hardware and software modules in the decoding processor. The software modules may be in a storage medium, and the storage medium is in the memory 92. The processor 91 reads information in the memory 92 and completes the steps of the foregoing method in combination with its hardware.

In an exemplary embodiment, the communication equipment may be implemented by one or more application specific integrated circuit (ASIC), DSP, programmable logic device (PLD), complex programmable logic device (CPLD), FPGA, general-purpose processor, controller, MCU, microprocessor, or other electronic component, for performing the foregoing method.

In an exemplary embodiment, one embodiment of the present application further provides a computer-readable storage medium, such as a memory 92 including a computer program. The computer program can be executed by the processor 91 of a node device to perform the steps of the foregoing method. The computer-readable storage medium may be a memory such as FRAM, ROM, PROM, EPROM, EEPROM, flash memory, magnetic surface memory, optical disk, or CD-ROM, and the computer-readable storage medium may also be various devices including one or any combination of the above memories.

The computer-readable storage medium provided in the embodiment of the present application stores a computer program thereon. The program is executed by a processor to perform the steps of the information processing method applied to the first network device; or, the program is executed by the processor to perform the information processing method applied to the fourth network device; or, the program is executed by the processor to perform the information processing method applied to the third network device; or, the program is executed by the processor to perform the information processing method applied to the first terminal; or, the program is executed by the processor to perform the information processing method applied to the second network device.

The methods disclosed in the several method embodiments provided in the present application may be arbitrarily combined under condition of no conflict to obtain new method embodiments.

The features disclosed in the several product embodiments provided in the present application may be arbitrarily combined under condition of no conflict to obtain a new product embodiment.

The features disclosed in the several method or device embodiments provided in the present application may be combined arbitrarily under condition of no conflict to obtain a new method embodiment or a new device embodiment.

In the embodiments provided in the present application, it should be understood that the disclosed device and method may be realized by other modes. For example, the device embodiment described above is only illustrative, for example, the units are divided according to the logical function and can be divided in other modes in fact. For instance, multiple units or components can be combined with or can be integrated into another system, or some characteristics can be ignored, or are not executed. On the other hand, the coupling or direct coupling or communication connection shown or discussed among each other may be indirect coupling or communication connection through some interfaces, devices or units, which may be electrical, mechanical or in other forms.

The units described above as separation units may or may not be physically separated, and the components displayed as the units may or may not be the physical units. The units can be located in one place or distributed to multiple network units. Partial or all of these units may be selected according to actual requirements to realize the purpose of the solutions in embodiments of the present disclosure.

Further, each function unit in each embodiment of the present disclosure may be integrated into one processing unit, each unit may be set in a separate physical location, or two or more than two units may be integrated into one unit. The above integrated units may be implemented in the form of hardware, or in the form of hardware plus software functional units.

Those of ordinary skill in the art can understand that all or part of the steps for realizing the above method embodiments may be completed by instructing related hardware through a program. The foregoing program may be stored in a computer-readable storage medium. The program is executed to perform the steps of the above method embodiments. The foregoing storage medium includes various media that can store program codes, such as removable storage device, ROM, RAM, magnetic disks or optical disks.

Alternatively, when the above integrated units of the present application are implemented in the form of a software functional unit, and sold or used as an independent product, such software functional unit may be stored in a computer readable storage medium. On the basis of such understanding, essence of technical solution in the present disclosure, or a part thereof contributing to the existing technology may be embodied in the form of software products. A computer software product is stored in a storage medium, and includes several instructions to enable a computer device (which may be a personal computer, a server, or a network device, and so on) to execute all the blocks, or some blocks in a method of each embodiment in the present disclosure. The foregoing storage medium includes various media that can store program codes, such as removable storage device, ROM, RAM, magnetic disks or optical disks.

It may be understood that these embodiments described in the present disclosure may be implemented by hardware, software, firmware, middleware, microcode or a combination thereof. For hardware implementation, a module, unit, sub-module, sub-unit may be implemented in one or more ASICs, a digital signal processor (DSP), a digital signal processing device (DSP device, DSPD), a programmable logic device (PLD), a field-programmable gate array (FPGA), a general-purpose processor, a controller, a microcontroller, a microprocessor, other electronic unit configured to perform the functions in the present disclosure or a combination thereof.

The above are only specific embodiments of the present application, but the protection scope of the present application is not limited to this. For persons having ordinary skill in the art, several improvements and changes may be made, without departing from the principle of the present disclosure. These improvements and changes should also be within the scope of the present disclosure. Therefore, the protection scope of the present application shall be subject to the protection scope of the claims.

## Claims

1. An information processing method, comprising:
receiving, by a first network device, first information sent by a second network device; wherein the first information at least includes a first service area, and the first information further includes at least one of the following: terminal information of a 5G virtual network group, data network name, slice information, indication to use a local area data network (LADN) mechanism, and indication to use a session management function (SMF) control mechanism.

2. The method according to claim 1, wherein the method further includes:
receiving, by the first network device, second information sent by a third network device, wherein the second information is used to obtain first data;
sending, by the first network device, third information to the third network device, wherein the third information includes the first data, and the first data includes at least one of the following: data network name, first service area and slice information.

3. The method according to claim 1, wherein the method further includes:
receiving, by the first network device, fourth information sent by a fourth network device, wherein the fourth information is used to obtain second data;
sending, by the first network device, fifth information to the fourth network device, wherein the fifth information includes the second data, and the second data includes at least one of the following: data network name, slice information, first service area, indication to use LADN mechanism, indication to use SMF control mechanism.

4. The method according to any one of claims 1 to 3, wherein the first service area includes at least one of the following: a service area of a local area data network and a service area of a 5G virtual network group.

5. The method according to any one of claims 1 to 3, wherein the data network name includes at least one of the following: a data network name (DNN) of a local area data network (LADN), and a data network name of a 5G virtual network group.

6. The method according to claim 1, wherein the method further includes:
pre-configuring the first network device with nineteenth information, wherein the nineteenth information indicates the LADN mechanism or indicates the SMF control mechanism.

7. An information processing method, comprising:
obtaining, by a fourth network device, second data from a first network device, and establishing or not establishing a session for transmitting 5G virtual network group data or services, based on the second data; wherein the second data includes at least one the following: data network name, slice information, first service area, indication to use a local area data network (LADN) mechanism, and indication to use a session management function (SMF) control mechanism.

8. The method according to claim 7, wherein the method further includes:
receiving, by the fourth network device, sixth information, wherein the sixth information includes at least one of the following: data network name, slice information; and/or,
the sixth information further includes first location information of a first terminal or indication information indicating that a location of the first terminal is within a third service area.

9. The method according to claim 7 or 8, wherein the establishing a session for transmitting 5G virtual network group data or services, based on the second data, includes:
in case that the first location information of the first terminal is in the first service area, establishing, by the fourth network device, the session for transmitting 5G virtual network group data or services, based on the second data.

10. The method according to claim 7 or 8, wherein the not establishing a session for transmitting 5G virtual network group data or services, based on the second data, includes:
in case that the first location information of the first terminal is not in the first service area, terminating or refusing to establish the session for transmitting 5G virtual network group data or services, or not establishing the session for transmitting 5G virtual network group data or services.

11. The method according to claim 7 or 8, wherein the method further includes:
sending, by the fourth network device, seventh information to a third network device, wherein the seventh information is used to subscribe to location information of the first terminal.

12. The method according to claim 7, wherein the method further includes:
in case that a location of the first terminal changes, obtaining, by the fourth network device, second location information of the first terminal from the third network device; and/or,
in case that the second location information is not within the first service area, updating or deleting the session for transmitting 5G virtual network group data or services.

13. The method according to claim 7, wherein the method further includes:
sending, by the fourth network device, eighth information to a fifth network device, wherein the eighth information is used to configure, update or delete user plane communication of the 5G virtual network group or of 5G LAN service.

14. The method according to claim 7, wherein the first service area includes at least one of the following: a service area of a local area data network and a service area of a 5G virtual network group.

15. The method according to claim 7 or 8, wherein the data network name includes at least one of the following: a data network name (DNN) of a local area data network (LADN), and a data network name of a 5G virtual network group.

16. The method according to claim 7, wherein the method further includes:
in case that the number of the fourth network devices is multiple, exchanging context of the 5G virtual network group through ninth information.

17. The method according to claim 7 or 8, wherein the method further includes:
sending, by the fourth network device, sixteenth information to the first terminal, wherein the sixteenth information is used to indicate rejection of a session establishment request of the first terminal, or to indicate a reason for session release, or to indicate to initiate a session establishment request again after a period of time.

18. The method according to claim 17, wherein the sending, by the fourth network device, sixteenth information to the first terminal, includes:
sending, by the fourth network device, the sixteenth information to the first terminal through the third network device or an access network device.

19. The method according to claim 17, wherein the period of time is represented by a timer, or represented by a start moment and/or an end moment.

20. The method according to claim 17, wherein the period of time is configured by the second network device for the 5G network or 5G network function.

21. The method according to claim 7 or 8, wherein the method further includes:
sending, by the fourth network device, seventeenth information to the first terminal, wherein the seventeenth information is used to indicate the first terminal not to initiate a session establishment request.

22. The method according to claim 7, wherein the method further includes:
receiving, by the fourth network device, eighteenth information sent by the second network device, wherein the eighteenth information at least includes the service area of the 5G virtual network group.

23. An information processing method, comprising:
sending, by a third network device, sixth information to a fourth network device; wherein the sixth information is used to request the fourth network device to establish a session for transmitting 5G virtual network group data or services, and the sixth information includes at least one of the following: data network name, slice information; and/or,
the sixth information further includes first location information of a first terminal or indication information indicating that a location of the first terminal is within a third service area.

24. The method according to claim 23, wherein the method further includes:
receiving, by the third network device, seventh information sent by the fourth network device, wherein the seventh information is used to subscribe to location information of the first terminal.

25. The method according to claim 24, wherein the method further includes:
in case that a location of the first terminal changes, sending, by the third network device, second location information of the first terminal to the fourth network device.

26. The method according to claim 23, wherein the method further includes:
obtaining, by the third network device, first data from a first network device, wherein the first data includes at least one of the following: data network name, first service area.

27. The method according to claim 26, wherein the method further includes:
receiving, by the third network device, tenth information sent by a sixth network device, wherein the tenth information includes a second service area.

28. The method according to claim 27, wherein the method further includes:
determining, by the third network device, a third service area based on the first service area and the second service area.

29. The method according to claim 28, wherein the method further includes:
sending, by the third network device, eleventh information to the first terminal, wherein the eleventh information at least includes the third service area.

30. The method according to claim 29, wherein in case that the location of the first terminal is in the third service area, the sixth information includes indication information indicating that the location of the first terminal is within the third service area.

31. The method according to claim 23, wherein the method further includes:
receiving, by the third network device, twelfth information from the first terminal, wherein the twelfth information is used to request to establish the session for transmitting 5G virtual network group data or services.

32. The method according to claim 31, wherein the twelfth information indicates that the location of the first terminal is in the third service area.

33. The method according to claim 28, wherein each of the first service area, the second service area, and the third service area includes at least one of the following: a service area of a local area data network and a service area of a 5G virtual network group.

34. The method according to claim 26, wherein the data network name includes at least one of the following: a data network name (DNN) of a local area data network (LADN), and a data network name of a 5G virtual network group.

35. An information processing method, comprising:
in case that a first terminal is in a third service area, sending, by the first terminal, twelfth information to a third network device, wherein the twelfth information is used to request establish a session for transmitting 5G virtual network group data or services.

36. The method according to claim 35, wherein the method further includes:
receiving, by the first terminal, eleventh information sent by the third network device, wherein the eleventh information at least includes the third service area.

37. The method according to claim 35, wherein the third service area includes at least one of the following: a service area of a local area data network and a service area of a 5G virtual network group.

38. An information processing method, comprising:
sending, by a third network device, fourteenth information to a first terminal; wherein the fourteenth information is used to indicate that the first terminal is in a service area of a 5G virtual network group, or to indicate that the first terminal is not in the service area of the 5G virtual network group, or to indicate the first terminal to initiate a session establishment request.

39. The method according to claim 38, wherein the method further includes:
receiving, by the third network device, fifteenth information sent by a second network device; wherein the fifteenth information includes at least one or more of the following:
a service area of the 5G virtual network group;
indication to use LADN mechanism;
indication to use SMF control mechanism.

40. The method according to claim 39, wherein the method further includes:
based on location information of the first terminal provided by an access network device and the service area of the 5G virtual network group, determining, by the third network device, that the first terminal is within the service area of the 5G virtual network group, or determining that the first terminal is not within the service area of the 5G virtual network group.

41. The method according to claim 40, wherein the sending, by a third network device, fourteenth information to a first terminal, includes:
when determining that the first terminal is in the service area of the 5G virtual network group, sending, by the third network device, to the first terminal, the fourteenth information used to indicate that the first terminal is in the service area of the 5G virtual network group; or,
when determining that the first terminal is not in the service area of the 5G virtual network group, sending, by the third network device, to the first terminal, the fourteenth information used to indicate that the first terminal is not in the service area of the 5G virtual network group.

42. The method according to claim 38, wherein the fourteenth information is used to indicate that the first terminal is in the service area of the 5G virtual network group, and/or is used to indicate the first terminal to initiate a session establishment request; the method further includes: receiving, by the third network device, a session establishment request from the first terminal.

43. An information processing method, comprising:
sending, by a fourth network device, sixteenth information to a first terminal; wherein the sixteenth information is used to indicate rejection of a session establishment request of the first terminal, or to indicate a reason for session release, or to indicate to initiate a session establishment request again after a period of time; or,
sending, by the fourth network device, seventeenth information to the first terminal; wherein the seventeenth information is used to indicate the first terminal not to initiate a session establishment request.

44. The method according to claim 43, wherein the sending, by a fourth network device, sixteenth information to a first terminal, includes:
sending, by the fourth network device, the sixteenth information or the seventeenth information, to the first terminal through a third network device or an access network device.

45. The method according to claim 43, wherein the period of time is represented by a timer, or represented by a start moment and/or an end moment.

46. The method according to claim 43, wherein the period of time is configured by the second network device for the 5G network or 5G network function.

47. The method according to claim 43, wherein the method further includes:
receiving, by the fourth network device, eighteenth information sent by a second network device, wherein the eighteenth information at least includes a service area of the 5G virtual network group.

48. An information processing method, comprising:
receiving, by a first terminal, fourteenth information sent by a third network device; wherein the fourteenth information is used to indicate that the first terminal is in a service area of a 5G virtual network group, or to indicate that the first terminal is not in the service area of the 5G virtual network group, or to indicate the first terminal to initiate a session establishment request; or,
receiving, by the first terminal, sixteenth information sent by a fourth network device; wherein the sixteenth information is used to indicate rejection of a session establishment request of the first terminal, or to indicate a reason for session release, or to indicate to initiate a session establishment request again after a period of time; or,
receiving, by the first terminal, seventeenth information sent by the fourth network device; wherein the seventeenth information is used to indicate the first terminal not to initiate a session establishment request.

49. The method according to claim 48, wherein the receiving, by the first terminal, sixteenth information sent by a fourth network device, includes:
receiving, by the first terminal, through the third network device or an access network device, the sixteenth information sent by the fourth network device; and/or,
the receiving, by the first terminal, the seventeenth information sent by the fourth network device, includes: receiving, by the first terminal, through the third network device or the access network device, the seventeenth information sent by the fourth network device.

50. The method according to claim 48, wherein the period of time is represented by a timer, or represented by a start moment and/or an end moment.

51. The method according to claim 48, wherein the period of time is configured by the second network device for the 5G network or 5G network function.

52. The method according to claim 48, wherein the method further includes:
based on the fourteenth information indicating that the first terminal is in the service area of the 5G virtual network group or indicating the first terminal to initiate a session establishment request, sending, by the first terminal, a session establishment request which is sent to the third network device through an access network device.

53. The method according to claim 48, wherein the method further includes:
based on the fourteenth information indicating that the first terminal is not in the service area of the 5G virtual network group, not sending, from the first terminal, a session establishment request.

54. An information processing method, comprising:
sending, by a second network device, fifteenth information to a third network device, and/or sending eighteenth information to a fourth network device, wherein the fifteenth information and the eighteenth information at least include a service area of 5G virtual network group.

55. An information processing device, comprising: a first receiving unit configured to receive first information sent by a second network device; wherein the first information at least includes a first service area, and the first information further includes at least one of the following: terminal information of a 5G virtual network group, data network name, slice information, indication to use a local area data network (LADN) mechanism, and indication to use a session management function (SMF) control mechanism.

56. An information processing device, comprising: a first communication unit configured to obtain second data from a first network device, and establish or not establish a session for transmitting 5G virtual network group data or services, based on the second data; wherein the second data includes at least one the following: data network name, slice information, first service area, indication to use a local area data network (LADN) mechanism, and indication to use a session management function (SMF) control mechanism.

57. An information processing device, comprising: a second communication unit configured to send sixth information to a fourth network device; wherein the sixth information is used to request the fourth network device to establish a session for transmitting 5G virtual network group data or services, and the sixth information includes at least one of the following: data network name, slice information; and/or,
the sixth information further includes first location information of a first terminal or indication information indicating that a location of the first terminal is within a third service area.

58. An information processing device, comprises: a third communication unit configured to, in case that a first terminal is in a third service area, send twelfth information to a third network device, wherein the twelfth information is used to request establish a session for transmitting 5G virtual network group data or services.

59. An information processing device, comprises: a fourth communication unit configured to send fourteenth information to a first terminal; wherein the fourteenth information is used to indicate that the first terminal is in a service area of a 5G virtual network group, or to indicate that the first terminal is not in the service area of the 5G virtual network group, or to indicate the first terminal to initiate a session establishment request.

60. An information processing device, comprises: a fifth communication unit configured to send sixteenth information to a first terminal; wherein the sixteenth information is used to indicate rejection of a session establishment request of the first terminal, or to indicate a reason for session release, or to indicate to initiate a session establishment request again after a period of time; or, send seventeenth information to the first terminal; wherein the seventeenth information is used to indicate the first terminal not to initiate a session establishment request.

61. An information processing device, comprises: a sixth communication unit configured to receive fourteenth information sent by a third network device; wherein the fourteenth information is used to indicate that the first terminal is in a service area of a 5G virtual network group, or to indicate that the first terminal is not in the service area of the 5G virtual network group, or to indicate the first terminal to initiate a session establishment request; or,
receive sixteenth information sent by a fourth network device; wherein the sixteenth information is used to indicate rejection of a session establishment request of the first terminal, or to indicate a reason for session release, or to indicate to initiate a session establishment request again after a period of time; or,
receive seventeenth information sent by the fourth network device; wherein the seventeenth information is used to indicate the first terminal not to initiate a session establishment request.

62. An information processing device, comprises: a seventh communication unit configured to send fifteenth information to a third network device, and/or send eighteenth information to a fourth network device, wherein the fifteenth information and the eighteenth information at least include a service area of 5G virtual network group.

63. A computer-readable storage medium, comprising a computer program stored thereon; wherein the program, when executed by a processor, causes the processor to perform steps of the method according to any one of claims 1 to 6; or,
the program, when executed by the processor, causes the processor to perform steps of the method according to any one of claims 7 to 22; or,
the program, when executed by the processor, causes the processor to perform steps of the method according to any one of claims 23 to 34; or,
the program, when executed by the processor, causes the processor to perform steps of the method according to any one of claims 35 to 37; or,
the program, when executed by the processor, causes the processor to perform steps of the method according to any one of claims 38 to 42; or,
the program, when executed by the processor, causes the processor to perform steps of the method according to any one of claims 43 to 47; or,
the program, when executed by the processor, causes the processor to perform steps of the method according to any one of claims 48 to 53; or,
the program, when executed by the processor, causes the processor to perform steps of the method according to claim 54.

64. A communication equipment, comprising: a memory, a processor, and a computer program stored in the memory and executable on the processor; wherein the program, when executed by the processor, causes the processor to perform steps of the method according to any one of claims 1 to 6; or,
the program, when executed by the processor, causes the processor to perform steps of the method according to any one of claims 7 to 22; or,
the program, when executed by the processor, causes the processor to perform steps of the method according to any one of claims 23 to 34; or,
the program, when executed by the processor, causes the processor to perform steps of the method according to any one of claims 35 to 37; or,
the program, when executed by the processor, causes the processor to perform steps of the method according to any one of claims 38 to 42; or,
the program, when executed by the processor, causes the processor to perform steps of the method according to any one of claims 43 to 47; or,
the program, when executed by the processor, causes the processor to perform steps of the method according to any one of claims 48 to 53; or,
the program, when executed by the processor, causes the processor to perform steps of the method according to claim 54.
